(19) Europäisches Patentamt
European Patent Office
Office européen des brevets

(11) EP 3 521 017 B1

(12) EUROPEAN PATENT SPECIFICATION

(45) Date of publication and mention of the grant of the patent:
**19.02.2025 Bulletin 2025/08**

(21) Application number: **17856248.4**

(22) Date of filing: **27.09.2017**

(51) International Patent Classification (IPC):
***B32B 27/00*** *(2006.01)* ***B32B 7/02*** *(2019.01)*
***B32B 27/18*** *(2006.01)* ***B32B 27/08*** *(2006.01)*
***B32B 7/022*** *(2019.01)* ***B32B 27/32*** *(2006.01)*

(52) Cooperative Patent Classification (CPC):
**B32B 1/00; B32B 3/30; B32B 7/12; B32B 9/005; B32B 9/041; B32B 9/042; B32B 9/043; B32B 9/045; B32B 13/04; B32B 13/042; B32B 13/06; B32B 13/10; B32B 13/12; B32B 15/04; B32B 15/043;** (Cont.)

(86) International application number:
**PCT/JP2017/035011**

(87) International publication number:
**WO 2018/062299 (05.04.2018 Gazette 2018/14)**

(54) **DECORATIVE SHEET AND DECORATIVE MATERIAL USING SAME**

DEKORATIVE FOLIE UND DEKORATIVES MATERIAL DAMIT

FEUILLE DÉCORATIVE ET MATÉRIAU DÉCORATIF UTILISANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2016 JP 2016191413**
**30.03.2017 JP 2017067209**

(43) Date of publication of application:
**07.08.2019 Bulletin 2019/32**

(73) Proprietor: **Dai Nippon Printing Co., Ltd.**
**Tokyo 162-8001 (JP)**

(72) Inventor: **UENO, Masanori**
**Tokyo 162-8001 (JP)**

(74) Representative: **Müller-Boré & Partner Patentanwälte PartG mbB**
**Friedenheimer Brücke 21**
**80639 München (DE)**

(56) References cited:
**JP-A- 2001 260 282**
**JP-A- 2003 341 294**
**JP-A- 2008 238 444**
**JP-A- 2011 207 183**
**JP-A- 2015 091 650**
**JP-A- 2016 117 280**
**JP-A- 2016 165 849**

- **K HERMANN ET AL: "Indentation Velocity Effect on Martens Hardness Measurement (PDF Download Available)", 31 January 2002 (2002-01-31), XP055298181, Retrieved from the Internet <URL:https://www.researchgate.net/publication/236609770_Indentation_Velocity_Effect_on_Martens_Hardness_Measurement> [retrieved on 20160829]**
- **MARCUS HUTCHINS: "HARDNESS OR FLEXIBILITY By Marcus Hutchins, Surface Specialties UCB", RADTECH E|5 2004 TECHNICAL PROCEEDINGS, 1 January 2004 (2004-01-01), XP055680950, Retrieved from the Internet <URL:https://www.radtech.org/proceedings/2004/papers/037.pdf> [retrieved on 20200330]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
**B32B 15/06; B32B 15/082; B32B 15/085; B32B 15/09; B32B 15/098; B32B 15/10; B32B 15/18; B32B 15/20; B32B 21/02; B32B 21/04; B32B 21/042; B32B 21/045; B32B 21/08; B32B 23/04; B32B 23/042; B32B 23/044; B32B 23/046; B32B 23/08; B32B 25/04; B32B 25/042; B32B 25/08; B32B 27/08; B32B 27/16; B32B 27/18; B32B 27/20; B32B 27/302; B32B 27/304; B32B 27/306; B32B 27/308; B32B 27/32; B32B 27/36; B32B 27/365; B32B 27/40; B32B 27/42;** B32B 2255/10; B32B 2255/26; B32B 2264/10; B32B 2264/102; B32B 2264/105; B32B 2264/12; B32B 2270/00; B32B 2274/00; B32B 2307/4026; B32B 2307/536; B32B 2307/584; B32B 2307/71; B32B 2307/712; B32B 2307/732; B32B 2419/00; B32B 2451/00

## Description

### Field of the Invention

The present invention relates to a decorative sheet and a decorative material using the same.

### Background of the Invention

For interior materials or exterior members of buildings such as a wall, a ceiling, a floor, and a front door, and fittings or fixture members such as a window frame, a door, a handrail, a crown molding, a skirting board, and a molding, as well as for surface decorative plates for kitchen, furniture, or cabinets of light electrical appliances, OA instruments, etc. and interior materials or exterior members of vehicles, products obtained by using a metal member such as a steel plate, a resin member, or a woody member as an adherend, and sticking a decorative sheet onto such an adherend are generally used. On sticking the decorative sheet onto the adherend, bending work such as V-cut work and lapping work, is generally performed; however, when the work characteristics of the decorative sheet are poor, there is generated such a problem that a bent portion is cracked, thereby causing whitening.

In order to solve such a problem, there is proposed a decorative sheet including a base material sheet, a pictorial pattern layer, a transparent resin layer, and a surface-protecting layer, in which the surface-protecting layer is formed of a composition containing an ionizing radiation-curable resin, the transparent resin layer has unevenness, and a colored resin layer using a predetermined resin is formed in the concave part of the unevenness (see, for example, PTL 1).

### Citation List

### Patent Literature

PTL 1: JP 2006-095992 A

JP 2015-91650A describes a decorative sheet and a decorative board.
JP 2001-260282A describes a sheet for floor material and floor material using the same.
JP 2011-207183A describes a laminated body.
JP 2008-238444A describes a decorative sheet.
JP 2016-117280A describes a decorative sheet.
JP 2016-165849A describes a decorative sheet for floor and floor material.

### Brief Description of Drawings

Fig. 1 is a schematic view showing a cross section of an example of a decorative sheet of the present invention.
Fig. 2 is a schematic view showing a cross section of an example of a decorative sheet of the present invention.
Fig. 3 is a cross-sectional schematic view showing an example of a layer constitution of a decorative material of the present invention.

### Summary of Invention

### Technical Problem

However, if it is intended to use the decorative sheet described in PTL 1 for a member which is used in the environment to be exposed to direct rays of the sun, for example, an exterior member such as a front door, a window frame, or fittings such as a door, nevertheless at the time of sticking the decorative sheet onto such a member, whitening, cracking, or the like is not generated in appearance, to reveal favorable finish, a surface-protecting layer or the like is gradually deteriorated with a lapse of time of outdoor exposure centering on a bent portion, to cause fracture and exfoliation. Thus, the decorative sheet described in PTL 1 was inferior in long-term weather resistance.

Now, the decorative sheet to be used for exterior members and members such as fittings, is required to have scratch resistance in addition to work characteristics and weather resistance. In order to obtain excellent work characteristics, it is needed to use a material having flexibility. On the other hand, as for the material having flexibility, the excellent scratch resistance is hardly obtained, and the work characteristics and the scratch resistance are performances conflicting with each other.

Under such circumstances, the present invention has been made, and its object is to provide a decorative sheet having excellent work characteristics, weather resistance, and scratch resistance and a decorative material using the same.

Solution to Problem

In order to solve the aforementioned problem, the present inventor made extensive and intensive investigations. As a result, it has been found that as for factors of resulting in deterioration of long-term weather resistance, on sticking the decorative sheet onto the adherend, a minute crack which is generated in an invisible degree is a caused; and when the minute crack is gradually expanded due to long-term use, especially with a lapse of time of outdoor exposure, a weathering agent such as an ultraviolet absorber, bleeds out from the expanded crack, and the surface-protecting layer containing the ultraviolet absorber falls off, the layer beneath the surface-protecting layer is bared and exposed to direct rays of the sun, whereby the deterioration of the respective layers of the decorative sheet is advanced, resulting in worsening of the weather resistance. In particular, it has been found that in the case of containing a white pigment of titanium oxide in the base material, the decorative layer, and the like, when the ultraviolet rays in the sunlight reach the titanium oxide in such a layer, a photocatalytic effect is revealed due to excitation of the titanium oxide by ultraviolet rays, the resin constituting the base material, the decorative layer, and the like is decomposed and denatured by such a photocatalytic effect, resulting in deterioration. Then, the present inventor has found that by suppressing the influences in the case of using a white pigment such as titanium oxide, for the base material, the decorative layer, and the like, the weather resistance can be enhanced. The present inventor has found that the aforementioned problem can be solved by the invention according to a decorative sheet having the following constitution and a decorative material using the same.
[1] A decorative sheet including a base material and a surface-protecting layer, wherein at least one of the base material and the surface-protecting layer contains a white pigment, the surface-protecting layer is a cured product of a curable resin composition, and a Martens hardness of the decorative sheet is 9 N/mm$^2$ or more and 25 N/mm$^2$ or less, wherein the white pigment is at least one selected from the group consisting of rutile type titanium oxide, white lead, and antimony white.
[2] The decorative sheet as set forth in the above [1], including a decorative layer between the base material and the surface-protecting layer, at least one of the base material and the decorative layer containing a white pigment.
[3] The decorative sheet as set forth in the above [1] or [2], including at least one of a resin layer and a primer layer between the base material and the surface-protecting layer, wherein the surface-protecting layer and the at least one layer of the resin layer and the primer layer contain an ultraviolet absorber.
[4] The decorative sheet as set forth in any one of the above [1] to [3], which includes a concave part on the surface of the surface-protecting layer on the opposite side to the surface on the base material side thereof.
[5] A decorative material including an adherend and the decorative sheet as set forth in any one of the above [1] to [4].

Advantageous Effects of Invention

In accordance with the present invention, it is possible to provide a decorative sheet having excellent work characteristics, weather resistance, and scratch resistance and a decorative material using the same.

Description of Embodiments

[Decorative Sheet]

The decorative sheet of the present invention includes a base material and a surface-protecting layer, wherein at least one of the base material and the surface-protecting layer contains a specific white pigment as described below in detail, the surface-protecting layer is a cured product of a curable resin composition, and a Martens hardness of the decorative sheet is 9 N/mm$^2$ or more and 25 N/mm$^2$ or less. The constitution of the decorative sheet of the present invention is explained by reference to Figs. 1 and 2. Fig. 1 is a schematic view showing a cross section of an example of a decorative sheet 10 of the present invention, and the decorative sheet 10 includes a base material 11 and a surface-protecting layer 16, in which a white pigment 18 is contained in the base material 11. Fig. 2 is a schematic view showing a cross section of an example of a preferred embodiment of the decorative sheet 10 of the present invention, and the decorative sheet 10 includes a base material 11, a decorative layer 12, an adhesive layer 13, a resin layer 14, a primer layer 15, and a surface-protecting layer 16 in this order, in which a rear surface primer layer 17 is provided on the surface of the base material 11 opposite to the side of the surface-protecting layer 16, and a white pigment 18 is contained in the base material 11 and the decorative layer 12. In addition, in Fig. 2, a concave part 19 is provided on the surface (outermost

surface) of the surface-protecting layer 16 opposite to the base material 11 thereof. It is illustrated that the concave part 19 includes one staying within the surface-protecting layer 16, one reaching the resin layer 14, and one reaching the base material 11.

(Martens Hardness)

The decorative sheet of the present invention has a Martens hardness of 9 N/mm$^2$ or more and 25 N/mm$^2$ or less. When the Martens hardness is less than 9 N/mm$^2$, the scratch resistance is not obtained, whereas when it is more than 25 N/mm$^2$, the work characteristics and the weather resistance are not obtained. In the present invention, specifically, the Martens hardness is a value measured with an ultra microhardness tester, this value being a value obtained in such a manner that a diamond indenter in a pyramid shape is indented into a sample (surface of the surface-protecting layer) at room temperature (23°C) while continuously increasing a load, a surface area A (mm$^2$) of a dent of the pyramid shape formed on the surface is calculated from a length of a diagonal line of the dent, and a test load F (N) when an indentation depth reaches 2 μm is divided by the surface area A. As the ultra microhardness tester, for example, a microhardness tester "PICODENTOR HM-500" (manufactured by Fischer Instruments K.K.) may be used.

In the present invention, it has been found that there is a correlation between a size of the Martens hardness and generation of a minute crack on the decorative sheet surface (surface-protecting surface) on subjecting the decorative sheet to bending work, and by allowing the Martens hardness to fall within a predetermined range, particularly controlling the Martens hardness to a predetermined upper limit value or less, generation of a minute crack of the surface-protecting layer on subjecting the decorative sheet to bending work and furthermore, falling-off with a lapse of time are suppressed. As a result, the surface-protecting layer continues to cover the surface of each of the layers located at the position toward the adherend from the surface-protecting layer such as a base material, a decorative layer, a resin layer, and a primer layer, thereby preventing direct contact of each of these layers with ultraviolet rays in the sunlight, the outside air, wind and rain, and so on. In particular, in a mode of containing the ultraviolet absorber in the layer located at the position toward the surface (namely, the sunlight incident side) from the layer containing a white pigment composed of titanium oxide, revelation of a photocatalytic effect of the titanium oxide pigment to be caused due to bleed-out of the ultraviolet absorber in each layer from the crack of the surface-protecting layer and furthermore, loss of the ultraviolet absorber in the surface-protecting layer following falling-off of the surface-protecting layer with a lapse of time is suppressed.

As a result, the excellent weather resistance has been obtained even in the long-term and severe environment. Furthermore, by allowing a value of the Martens hardness to fall within a predetermined range, particularly controlling the Martens hardness to a predetermined lower limit value or more, the excellent scratch resistance has been also obtained.

From the viewpoint of enhancing the work characteristics, the weather resistance, and the scratch resistance, the Martens hardness is preferably 10 N/mm$^2$ or more and 22 N/mm$^2$ or less, and more preferably 12 N/mm$^2$ or more and 20 N/mm$^2$ or less. In this specification, the numerical values according to "or more", "or less", and "X to Y" are a numerical value capable of being arbitrarily combined with each other.

The Martens hardness can be controlled mainly by various constitutions of the base material and the surface-protecting layer. For example, it is possible to control the Martens hardness to 9 N/mm$^2$ or more and 25 N/mm$^2$ or less by arbitrarily selecting various constitutions of the base material and the surface-protecting layer such as a material and a thickness, as mentioned later.

Each of the layers constituting the decorative sheet of the present invention is hereunder explained.

(Base Material)

As for the base material, those which are typically used as a base material of a decorative sheet can be adopted without limitations, and representatively, a resin base material composed of a thermoplastic resin is used. As for the thermoplastic resin, for example, a polyolefin resin such as polypropylene and polyethylene, a polyester resin, a polycarbonate resin, an acrylonitrile-butadiene-styrene resin (hereinafter also referred to as "ABS resin"), an acrylic resin, and a vinyl chloride resin are used. Among these, taking into consideration the work characteristics, a polyolefin resin, a polyester resin, a polycarbonate resin, a vinyl chloride resin, and an ABS resin are preferred, and a polyolefin resin is especially preferred. In the present invention, these resins can be used singly or in combination of plural kinds thereof.

The polyolefin resin is not particularly limited, and examples thereof include polyethylene (low-density, medium-density, and high-density), polypropylene, polymethylpentene, polybutene, an ethylene-propylene copolymer, a propylene-butene copolymer, an ethylene-vinyl acetate copolymer, an ethylene-acrylic acid copolymer, an ethylene-propylene-butene copolymer, and a polyolefin-based thermoplastic elastomer. Above all, polyethylene (low-density, medium-density, and high-density), polypropylene, an ethylene-propylene copolymer, and a propylene-butene copolymer are preferred.

In the decorative sheet of the present invention, at least one of the base material and the surface-protecting layer is required to contain a white pigment. The white pigment may be contained in only the base material, may be contained in

only the surface-protecting layer, or may be contained in the base material and the surface-protecting layer. In the present invention, it is preferred that the base material is a colored resin base material containing a white pigment. By using the resin base material which is colored by the white pigment, in the case where a surface hue of the adherend to which the decorative sheet is stuck is scattered, it is easy to favorably mask the surface hue, more excellent designability is obtained, and the stability of a color tone of a decorative layer which is provided if desired can be enhanced. On the other hand, when the decorative sheet containing a white pigment is used in the environment to be exposed to direct rays of the sun, a concern to the weather resistance is caused due to a photocatalytic function thereof. However, in the present invention, by adopting a constitution in which the surface-protecting layer is formed of a cured product of a curable resin composition, and the decorative sheet has a predetermined Martens hardness, it has become possible to reduce the influence of the white pigment against the weather resistance.

According to the present invention, the white pigment is at least one selected from the group consisting of rutile type titanium oxide, white lead, and antimony white. These can be used singly or in combination of plural kinds thereof. In the present invention, taking into consideration masking properties (color formation), easiness of handling, and so on, rutile type titanium oxide is preferred.

Generally, titanium oxide may include an anatase type, a brookite type, and a rutile type. However, taking into consideration excellent masking properties (color formation) and weather resistance, a rutile type is used according to the present invention when the white pigment is a titanium oxide. The rutile-type titanium oxide is low in photocatalytic activity, and therefore, even when it is used in the environment to be exposed to direct rays of the sun, a photocatalytic reaction is hardly generated, the influence against the weather resistance due to the photocatalytic reaction is reduced, and the weather resistance is enhanced.

As for the white pigment, from the viewpoint of selecting one having low photocatalytic activity taking into consideration the weather resistance, a surface-treated white pigment is preferred. As the surface-treated white pigment, there is preferably exemplified one having been surface-treated with an inorganic metal hydrous oxide, the surface of which is coated by inorganic hydrous oxide fine particles. As the inorganic metal hydrous oxide, there are preferably exemplified alumina, silica, and titania as well as zirconia, tin oxide, antimony oxide, and zinc oxide. In addition, there are also preferably exemplified those obtained by subjecting surface-untreated titanium oxide or titanium oxide having been surface-treated with the aforementioned inorganic metal hydrous oxide to a surface treatment with a coupling agent such as a silane coupling agent, a titanate coupling agent, and an aluminum coupling agent, or a silicone oil, a fluorine-based oil, or the like, thereby making the surface to hydrophobic or oleophilic. In the present invention, a white pigment having been subjected to the aforementioned surface treatment singly or a combination of a plurality of the aforementioned surface treatments can be used.

In the present invention, from the viewpoint of obtaining excellent masking properties, a surface treatment with alumina, silica, or zinc oxide is preferred, a surface treatment with alumina or silica is more preferred, and a surface treatment with alumina and silica is especially preferred.

An average particle diameter of primary particles of the white pigment is preferably 0.02 $\mu$m or more and 1.5 $\mu$m or less, more preferably 0.15 $\mu$m or more and 0.5 $\mu$m or less, and still more preferably 0.1 $\mu$m or more and 0.3 $\mu$m or less. When the average particle diameter of the white pigment falls within the aforementioned range, excellent color formation is obtained, and design ability is obtained along with high masking properties. Here, the average particle diameter is a value which can be determined as a mass average value D50 in the particle size distribution measurement by the laser beam diffraction method.

In the case where the base material is a colored resin base material containing a white pigment, an embodiment of coloration is not particularly limited, and it may be transparent coloration or may be opaque coloration (masking coloration), and these may be arbitrarily selected. For example, in the case of coloring and masking a base color of the adherend to which the decorative sheet is stuck such as a steel plate, opaque coloration may be selected. On the other hand, in the case of making a base pattern of the adherend to be used for the decorative material visible, transparent coloration may be selected.

The content of the white pigment may be suitably controlled according to whether the transparent coloration or the opaque coloration (masking coloration) is adopted. For example, the content of the white pigment is preferably 1 part by mass or more and 50 parts by mass or less, more preferably 3 parts by mass or more and 40 parts by mass or less, still more preferably 5 parts by mass or more and 30 parts by mass or less, and especially preferably 5 parts by mass or more and 20 parts by mass or less based on 100 parts by mass of the resin constituting the base material.

The base material may contain a colorant other than the white pigment. Examples of the colorant include an inorganic pigment such as iron black, chrome yellow, titan yellow, red iron oxide, cadmium red, ultramarine blue, and cobalt blue; an organic pigment or dye such as quinacridone red, isoindolinone yellow, a nickel azo complex, and phthalocyanine blue; a metal pigment composed of a scaly foil piece of aluminum, brass, etc.; and an iridescent (pearl) pigment composed of a scaly foil piece of titanium dioxide-coated mica, basic lead carbonate, etc.

The base material may be blended with an additive, as the need arises. Examples of the additive include an inorganic filler such as calcium carbonate and clay, a flame retardant such as magnesium hydroxide, an antioxidant, a

lubricating agent, a foaming agent, an ultraviolet absorber, and a light stabilizer. The blending amount of the additive is not particularly limited within a range where the work characteristics are not particularly hindered, and it can be suitably set according to required characteristics and so on.

From the viewpoint of enhancing the weather resistance of the decorative sheet of the present invention, among the aforementioned additives, it is preferred to use a weathering agent such as an ultraviolet absorber and a light stabilizer, and it is especially preferred to use a light stabilizer.

In the case of providing a decorative material, the base material is a layer located between the surface-protecting layer and the adherend, and it may be said that the influence against worsening of the weather resistance to be caused due to bleed-out of the weathering agent such as an ultraviolet absorber and a light stabilizer, is lower than that in other layers, The ultraviolet absorber to be used for the base material is not particularly limited, and examples thereof include a benzotriazole-based ultraviolet absorber, a benzophenone-based ultraviolet absorber, and a triazine-based ultraviolet absorber. In addition, for example, a specified hydroxyphenyl triazine-based ultraviolet absorber which is exemplified as one to be especially preferably used for the surface resin layer as mentioned later can be, as a matter of course, preferably used.

As the light stabilizer, a hindered amine-based light stabilizer is preferred, and examples thereof include 4-benzoyloxy-2,2,6,6-tetramethyl piperidine, 1,2,2,6,6-pentamethyl-4-piperidinyl (meth)acrylate, bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidinyl) sebacate, bis(1,2,2,6,6-pentamethyl-4-piperidinyl) sebacate, methyl(1,2,2,6,6-pentamethyl-4-piperidinyl) sebacate, 2,4-bis[N-butyl-N-(1-cyclohexyloxy-2,2,6,6-tetramethyl-4-piperidinyl)amino]-6-(2-hydroxyethylamine)-1,3,5-tirazine), tetrakis(1,2,2,6,6-pentamethyl-4-piperidyl)-1,2,3,4-butanetetracarboxylate, and bis(1,2,2,6,6-pentamethyl-4-piperidyl)-2-(3,5-di-t-butyl-4-hydroxybenzyl)-2-n-buty 1 malonate. Among these, a hindered amine-based light stabilizer derived from decanedioic acid (sebacic acid) such as bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidinyl) sebacate, bis(1,2,2,6,6-pentamethyl-4-piperidinyl) sebacate, and methyl(1,2,2,6,6-pentamethyl-4-piperidinyl) sebacate, is preferred.

Such an ultraviolet absorber or light stabilizer can be used singly or in combination of plural kinds thereof. In addition, the ultraviolet absorber or light stabilizer may also be, for example, one having a reactive functional group having an ethylenic double bond such as a (meth)acryloyl group, a vinyl group, and an allyl group, as exemplified above as one of the light stabilizers.

The content of the ultraviolet absorber in the base material is preferably 0.1 parts by mass or more and 5 parts by mass or less, more preferably 0.2 parts by mass or more and 3 parts by mass or less, and still more preferably 0.3 parts by mass or more and 2 parts by mass or less based on 100 parts by mass of the resin constituting the base material. In addition, the content of the light stabilizer in the base material is preferably 0.5 parts by mass or more and 10 parts by mass or less, more preferably 1 part by mass or more and 8 parts by mass or less, and still more preferably 3 parts by mass or more and 6 parts by mass or less based on 100 parts by mass of the resin constituting the base material. When the contents of the ultraviolet absorber and the light stabilizer in the base material fall within the foregoing ranges, respectively, an excellent addition effect is obtained without generating bleed-out.

The base material may be a monolayer formed of the aforementioned resin or a multilayer formed of the resins of the same kind or different kinds.

In particular, taking into consideration the work characteristics, a thickness of the base material is preferably 20 μm or more and 150 μm or less, more preferably 25 μm or more and 120 μm or less, still more preferably 30 μm or more and 100 μm or less, and especially preferably 40 μm or more and 80 μm or less.

For the purposes of enhancing interlayer adhesiveness between the base material and other layers and reinforcing adhesive properties to an adherend of every sort, and so on, one or both surfaces of the base material can be subjected to a surface treatment such as a physical surface treatment, e.g., an oxidation method and a surface roughening method, and a chemical surface treatment.

Examples of the oxidation method include a corona discharge treatment, a chrome oxidation treatment, a flame treatment, a hot-air treatment, and an ozone/ultraviolet treatment. Examples of the surface roughening method include a sandblast method and a solvent treatment method. The surface treatment is suitably selected according to the kind of the base material. In general, the corona discharge treatment method is preferably adopted from the standpoints of the effect, operability, etc. of the surface treatment.

For the purposes of enhancing interlayer adhesiveness between the base material and other layer, reinforcing adhesive properties to an adherend of every sort, suppressing deterioration to be caused due to the white pigment, and so on, a treatment of forming a primer layer and a rear surface primer layer on the base material may be applied. These primer layers are mentioned later.

(Surface-Protecting Layer)

The surface-protecting layer is a cured product of a curable resin composition, and is a layer located on the

outermost layer of the decorative sheet of the present invention which is provided directly on the base material or other layers, for example, a decorative layer to be optionally provided, or a primer layer for not only enhancing the interlayer adhesiveness between the base material or the decorative layer and the surface-protecting layer but also reducing the influence against the deterioration of the surface-protecting layer to be caused due to the white pigment in the base material. By providing such a surface-protecting layer, the decorative sheet of the present invention not only has excellent work characteristics but also has excellent scratch resistance and weather resistance.

The surface-protecting layer is constituted of a cured product of a curable resin composition containing a curable resin.

As the curable resin which is used for the formation of the surface-protecting layer, in addition to a thermosetting resin such as a two-component curing type resin, an ionizing radiation-curable resin or the like is preferably used. The curable resin may also be of a so-called hybrid type of a combination of these plural kinds, for example, a combination of an ionizing radiation-curable resin and a thermosetting resin, or a combination of a curable resin and a thermoplastic resin.

As the curable resin, an ionizing radiation-curable resin is preferred from the viewpoints of enhancing a crosslinking density of the resin constituting the surface-protecting layer and enhancing the scratch resistance and the weather resistance. An electron beam-curable resin is more preferred from the viewpoints that it can be coated in the absence of a solvent and that the handling is easy.

(Ionizing Radiation-Curable Resin)

The ionizing radiation-curable resin refers to a resin capable of being crosslinked and cured upon irradiation with ionizing radiations and having an ionizing radiation-curable functional group. The ionizing radiation-curable functional group as referred to herein is a group capable of being crosslinked and cured upon irradiation with ionizing radiations. There is preferably exemplified a functional group having an ethylenic double bond such as a (meth)acryloyl group, a vinyl group, and an allyl group. In addition, the ionizing radiations mean one having an energy quantum capable of polymerizing or crosslinking molecules among electromagnetic waves and charged particle beams. Typically, though an ultraviolet ray (UV) or an electron beam (EB) is used, and electromagnetic waves, such as an X-ray and a $\gamma$-ray and charged particle beams such as an $\alpha$-ray and an ion beam are also included.

Specifically, the ionizing radiation-curable resin can be suitably selected and used among polymerizable monomers and polymerizable oligomers which have hitherto been customarily used as the ionizing radiation-curable resin.

As the polymerizable monomer, a (meth)acrylate-based monomer having a radical polymerizable unsaturated group in a molecule thereof is preferred, and above all, a polyfunctional (meth)acrylate monomer is preferred. Here, the "(meth)acrylate" means "acrylate or methacrylate".

Examples of the polyfunctional (meth)acrylate monomer include a (meth)acrylate monomer having 2 or more ionizing radiation-curable functional groups in a molecule thereof and having at least a (meth)acryloyl group as the functional group.

From the viewpoint of enhancing the work characteristics, the scratch resistance, and the weather resistance, the number of functional groups is preferably 2 or more and 8 or less, more preferably 2 or more and 6 or less, still more preferably 2 or more and 4 or less, and especially preferably 2 or more and 3 or less. Examples of the (meth)acrylate-based monomer having 2 or more and 8 or less radical polymerizable functional groups in a molecule thereof include diethylene glycol di(meth)arylate, propylene glycol di(meth)arylate, 1,6-hexanediol di(meth)arylate, trimethylolpropane tri(meth) arylate, trimethylolpropane ethylene oxide tri(meth)arylate, dipentaerythritol penta(meth)arylate, dipentaerythritol hexa(meth)arylate, and tripentaerythritol octaacrylate. These polyfunctional (meth)acrylates may be used singly or in combination of plural kinds thereof.

Examples of the polymerizable oligomer include a (meth)acrylate oligomer having 2 or more ionizing radiation-curable functional groups in a molecule thereof and having at least a (meth)acryloyl group as the functional group. Examples thereof include a urethane (meth)acrylate oligomer, an epoxy (meth)acrylate oligomer, a polyester (meth) acrylate oligomer, a polyether (meth)acrylate oligomer, a polycarbonate (meth)acrylate oligomer, and an acryl (meth) acrylate oligomer.

Furthermore, other examples of the polymerizable oligomer include a highly hydrophobic polybutadiene (meth) acrylate-based oligomer having a (meth)acrylate group in a side chain thereof; a silicone (meth)acrylate-based oligomer having a polysiloxane bond in a main chain thereof; an aminoplast resin (meth)acrylate-based oligomer obtained by modifying an aminoplast resin having many reactive groups in a small molecule thereof; and an oligomer having a cationic polymerizable functional group in a molecule thereof such as a novolak-type epoxy resin, a bisphenol-type epoxy resin, an aliphatic vinyl ether, and an aromatic vinyl ether.

These polymerizable oligomers may be used singly or in combination of plural kinds thereof. From the viewpoint of enhancing the work characteristics, the scratch resistance, and the weather resistance, a urethane (meth)acrylate oligomer, an epoxy (meth)acrylate oligomer, a polyester (meth)acrylate oligomer, a polyether (meth)acrylate oligomer, a

polycarbonate (meth)acrylate oligomer, and an acryl (met)acrylate oligomer are preferred; a urethane (meth)acrylate oligomer and a polycarbonate (meth)acrylate oligomer are more preferred; and a urethane (meth)acrylate oligomer is still more preferred.

From the viewpoint of enhancing the work characteristics, the scratch resistance, and the weather resistance, the number of functional groups of the polymerizable oligomers is preferably 2 or more and 8 or less, and the upper limit thereof is more preferably 6 or less, still more preferably 4 or less, and especially preferably 3 or less.

From the viewpoint of enhancing the work characteristics, the scratch resistance, and the weather resistance, a weight average molecular weight of these polymerizable oligomers is preferably 2,500 or more and 7,500 or less, more preferably 3,000 or more and 7,000 or less, and still more preferably 3,500 or more and 6,000 or less. Here, the weight average molecular weight is an average molecular weight which is measured by means of GPC analysis and expressed in terms of standard polystyrene.

In the present invention, for the purpose of decreasing the viscosity of the polyfunctional (meth)acrylate, a monofunctional (meth)acrylate can be suitably used together with the polyfunctional (meth)acrylate and so on within a range where the object of the present invention is not impaired. These monofunctional (meth)acrylates may be used singly or in combination of plural kinds thereof.

In the present invention, from the viewpoint of enhancing the work characteristics, the scratch resistance, and the weather resistance, the ionizing radiation-curable resin is preferably one containing a polymerizable oligomer. The content of the polymerizable oligomer in the ionizing radiation-curable resin is preferably 80% by mass or more, more preferably 90% by mass or more, still more preferably 95% by mass or more, and especially preferably 100% by mass.

The surface-protecting layer may contain a white pigment. As the white pigment, those disclosed as the white pigment to be contained in the base material can be used. In the case where the white pigment is contained in the surface-protecting layer, the content of the white pigment is preferably 1 part by mass or more and 30 parts by mass, more preferably 3 parts by mass or more and 20 parts by mass or less, and still more preferably 5 parts by mass or more and 10 parts by mass or less based on 100 parts by mass of the resin constituting the surface-protecting layer.

To the surface-protecting layer, an additive such as an ultraviolet absorber, an ultraviolet ray-shielding agent, a light stabilizer, an abrasion resistance enhancer, a polymerization inhibitor, a crosslinking agent, an infrared absorber, an antistatic agent, an adhesion enhancer, a levelling agent, a thixotropy-imparting agent, a coupling agent, a plasticizer, an antifoaming agent, a filler, a blocking inhibitor, a lubricating agent, and a solvent, can be added within a range where the object of the present invention is not impaired.

From the viewpoint of enhancing the weather resistance of the decorative sheet of the present invention, among the aforementioned additives, a weathering agent such as an ultraviolet absorber and a light stabilizer is preferably used. In addition, with respect to the light stabilizer, from the same viewpoint, it is preferred that at least one of the base material and the surface-protecting layer contains the light stabilizer, and it is more preferred that the base material and the surface-protecting agent contain the light stabilizer.

Examples of the ultraviolet absorber include a benzotriazole-based ultraviolet absorber, a benzophenone-based ultraviolet absorber, and a triazine-based ultraviolet absorber as exemplified as the ultraviolet absorber which may be contained in the base material. A triazine-based ultraviolet absorber is preferred. In addition, among the triazine-based ultraviolet absorbers, a hydroxyphenyl triazine-based ultraviolet absorber in which three of at least one organic group selected from a hydroxyphenyl group, an alkoxyphenyl group, and an organic group containing these groups are connected to the triazine ring is more preferred, and a hydroxyphenyl triazine-based ultraviolet absorber represented by the following general formula (1) is still more preferred. Since the surface-protecting layer is a layer located on the outermost surface of the decorative sheet, one which hardly causes bleed-out from the layer is preferred. The hydroxyphenyl triazine-based ultraviolet absorber represented by the following general formula (1) has a branched structure. Therefore, the hydroxyphenyl triazine-based ultraviolet absorber represented by the following general formula (1) is expected to hardly cause bleed-out, and from the viewpoint of a weathering performance, it is especially preferred as an ultraviolet absorber to be used for the surface-protecting layer.

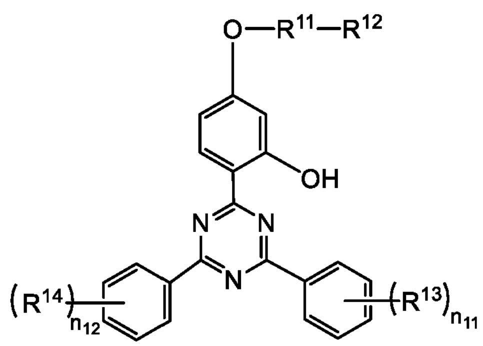

(1)

In the general formula (1), $R^{11}$ is a divalent organic group; $R^{12}$ is an ester group represented by -C(=O)$OR^{15}$; $R^{13}$, $R^{14}$, and $R^{15}$ are each independently a monovalent organic group; and $n_{11}$ and $n_{12}$ are each independently an integer of 1 to 5.

As the divalent organic group represented by $R^{11}$, an aliphatic hydrocarbon group such as an alkylene group and an alkenylene group, is exemplified, and from the viewpoint of weather resistance, an alkylene group is preferred, and its carbon number is preferably 1 or more and 20 or less, more preferably 1 or more and 12 or less, still more preferably 1 or more and 8 or less, and especially preferably 1 or more and 4 or less. The alkylene group and the alkenylene group may be each linear, branched, or cyclic, and preferably linear or branched.

Examples of the alkylene group having 1 or more and 20 or less carbon atoms include a methylene group, a 1,1-ethylene group, a 1,2-ethylene group, various propylene groups such as 1,3-propylene, 1,2-propylene, and 2,2-propylene (the term "various" will hereinafter express the matter that a linear form, a branched form, and isomers thereof are inclusive), various butylene groups, various pentylene groups, various hexylene groups, various heptylene groups, various octylene groups, various nonylene groups, various decylene groups, various undecylene groups, various dodecylene groups, various tridecylene groups, various tetradecylene groups, various pentadecylene groups, various hexadecylene groups, various heptadecylene groups, various octadecylene groups, various nonadecylene groups, and various eicosylene groups.

As the monovalent organic group represented by $R^{13}$ and $R^{14}$, an alkyl group, an alkenyl group, a cycloalkyl group, an aryl group, and an arylalkyl group are exemplified; an aromatic hydrocarbon group such as an aryl group and an arylalkyl group, is preferred; and an aryl group is preferred. Above all, as the monovalent organic represented by $R^{13}$ and $R^{14}$, a phenyl group is preferred.

Examples of the aryl group include an aryl group having preferably 6 or more and 20 or less carbon atoms, more preferably 6 or more and 12 or less carbon atoms, and still more preferably 6 or more and 10 or less carbon atoms, for example, a phenyl group, various methylphenyl groups, various ethylphenyl groups, various dimethylphenyl groups, various propylphenyl groups, various trimethylphenyl groups, various butylphenyl groups, and various naphthyl groups. Examples of the arylalkyl group include an arylalkyl group having preferably 7 or more and 20 or less carbon atoms, more preferably 7 or more and 12 or less carbon atoms, and still more preferably 7 or more and 10 or less carbon atoms, for example, a benzyl group, a phenethyl group, various phenylpropyl groups, various phenylbutyl groups, various methylbenzyl groups, various ethylbenzyl groups, various propylbenzyl groups, various butylbenzyl groups, and various hexylbenzyl groups.

As the monovalent organic group represented by $R^{15}$, an alkyl group, an alkenyl group, a cycloalkyl group, an aryl group, and an arylalkyl group are exemplified; an aliphatic hydrocarbon group such as an alkyl group and an alkenyl group, is preferred; and an alkyl group is more preferred. That is, $R^{12}$ is preferably an alkyl ester group or an alkenyl ester group, and more preferably an alkyl ester group.

Examples of the alkyl group include an alkyl group having preferably 1 or more and 20 or less carbon atoms, more preferably 2 or more and 16 or less carbon atoms, and still more preferably 6 or more and 12 or less carbon atoms, for example, a methyl group, an ethyl group, various propyl groups, various butyl groups, various pentyl groups, various hexyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, various octadecyl groups, various nonadecyl groups, and various eicosyl groups.

Examples of the alkenyl group include an alkenyl group having preferably 2 or more and 20 or less carbon atoms, more preferably 3 or more and 16 or less carbon atoms, and still more preferably 6 or more and 12 or less carbon atoms, for example, a vinyl group, various propenyl groups, various butenyl groups, various pentenyl groups, various hexenyl groups, various octenyl groups, various nonenyl groups, various decenyl groups, various undecenyl groups, various dodecenyl groups, various tridecenyl group, various tetradecenyl groups, various pentadecenyl groups, various hexadecenyl groups, various heptadecenyl groups, various octadecenyl groups, various nonadecenyl groups, and various eicosenyl groups.

As the hydroxyphenyl triazine compound represented by the general formula (1), more specifically, a hydroxyphenyl triazine compound wherein $R^{11}$ is an alkylene group having 1 or more and 20 or less carbon atoms, $R^{12}$ and $R^{15}$ are each an alkyl ester group having an alkyl group having 1 or more and 20 or less carbon atoms, $R^{13}$ and $R^{14}$ are each an aryl group having 6 or more and 20 or less carbon atoms, and $n_{11}$ and $n_{12}$ are each 1 is preferred; a hydroxyphenyl triazine compound wherein $R^{11}$ is an alkylene group having 1 or more and 12 or less carbon atoms, $R^{12}$ and $R^{15}$ are each an alkyl ester group having an alkyl group having 2 or more and 16 or less carbon atoms, $R^{13}$ and $R^{14}$ are each an aryl group having 6 or more and 12 or less carbon atoms, and $n_{11}$ and $n_{12}$ are each 1 is more preferred; a hydroxyphenyl triazine compound wherein $R^{11}$ is an alkylene group having 1 or more and 8 or less carbon atoms, $R^{12}$ and $R^{15}$ are each an alkyl ester group having an alkyl group having 6 or more and 12 or less carbon atoms, $R^{13}$ and $R^{14}$ are each an aryl group having 6 or more and 10 or less carbon atoms, and $n_{11}$ and $n_{12}$ are each 1 is still more preferred; and a hydroxyphenyl triazine compound wherein $R^{11}$ is an alkylene group having 1 or more and 4 or less carbon atoms, $R^{12}$ and $R^{15}$ are each an ester group having an alkyl group having 8 carbon atoms, $R^{13}$ and $R^{14}$ are each a phenyl group, and $n_{11}$ and $n_{12}$ are each 1 is especially

preferred.

As the hydroxyphenyl triazine compound represented by the general formula (1), still more specifically, a hydroxyphenyl triazine compound represented by the following chemical formula (2), wherein $R^{11}$ is an ethylene group, $R^{12}$ and $R^{15}$ are each an ester group that is an isooctyl group, $R^{13}$ and $R^{14}$ are each a phenyl group, and $n_{11}$ and $n_{12}$ are each 1, namely 2-(2-hydroxy-4-[l-octyloxycarbonylethoxy]phenyl)-4,6-bis(4-phenylphenyl)-1,3,5-t riazine, is preferred. Tbe hydroxyphenyl triazine compound is, for example, available as a marketed product ("TINUVIN 479", manufactured by BASF SE).

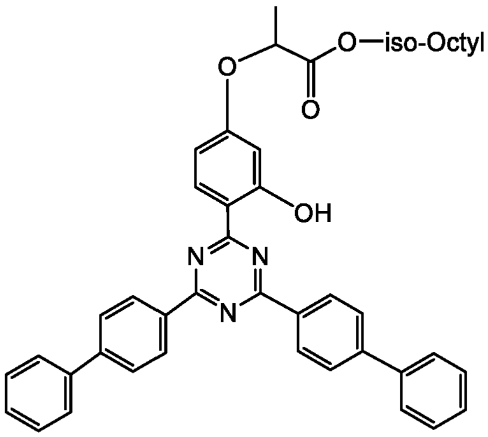

(2)

As the light stabilizer, a hindered amine-based light stabilizer is preferred, and the hindered amine-based light stabilizers exemplified as the light stabilizer which may be used for the base material can be used. From the viewpoint of weather resistance, a hindered amine-based light stabilizer derived from decanedioic acid (sebacic acid) is preferred.

Such an ultraviolet absorber or light stabilizer can be used singly or in combination of plural kinds thereof. In addition, the ultraviolet absorber or light stabilizer may also be, for example, one having a reactive functional group having an ethylenic double bond such as a (meth)acryloyl group, a vinyl group, and an allyl group.

The content of the ultraviolet absorber in the surface-protecting layer is preferably 0.1 parts by mass or more and 10 parts by mass or less, more preferably 0.2 parts by mass or more and 5 parts by mass or less, still more preferably 0.3 parts by mass or more and 3 parts by mass or less, and especially preferably 0.5 parts by mass or more and 2 parts by mass or less based on 100 parts by mass of the resin constituting the surface-protecting layer.

The content of the light stabilizer in the surface-protecting layer is preferably 0.1 parts by mass or more and 10 parts by mass or less, more preferably 0.5 parts by mass or more and 8 parts by mass or less, still more preferably 1 part by mass or more and 5 parts by mass or less, and especially preferably 1.5 parts by mass or more and 3 parts by mass or less based on 100 parts by mass of the resin constituting the surface-protecting layer. When the contents of the ultraviolet absorber and the light stabilizer in the surface-protecting layer fall within the foregoing ranges, respectively, an excellent addition effect is obtained without generating bleed-out.

From the viewpoint of enhancing the work characteristics, the weather resistance, and the scratch resistance, a thickness of the surface-protecting layer is preferably 1.5 $\mu$m or more and 20 $\mu$m or less, more preferably 2 $\mu$m or more and 15 $\mu$m or less, and still more preferably 3 $\mu$m or more and 10 $\mu$m or less.

(Decorative Layer)

From the viewpoint of enhancing the designability, it is preferred that the decorative sheet of the present invention includes a decorative layer between the base material and the surface-protecting layer. The decorative layer may be, for example, a colored layer of coating the whole surface (so-called solid colored layer), may be a pictorial pattern layer to be formed by printing various patterns by using inks and a printer, or may be a combination thereof. For example, in the case of coloring and masking a base color of the adherend, by providing a solid colored layer, the designability can be enhanced while coloring and masking. Furthermore, from the viewpoint of enhancing the designability, the solid colored layer and the pictorial pattern layer may be combined, whereas in the case of putting a base pattern of the adherend to good use, only the pictorial pattern layer may be provided without forming the solid colored layer.

As the ink used for the pictorial pattern layer, there is used one obtained by suitably mixing a binder with a colorant such as a pigment and a dye, an extender pigment, a solvent, a stabilizer, a plasticizer, a catalyst, a curing agent, an ultraviolet absorber, a light stabilizer, and the like.

The binder is not particularly limited, and for example, there are preferably exemplified resins such as a urethane resin, an acrylic polyol resin, an acrylic resin, an ester resin, an amide resin, a butyral resin, a styrene resin, a urethane-acrylic copolymer, a polycarbonate-based urethane-acrylic copolymer (a urethane-acrylic copolymer derived from a polymer (polycarbonate polyol) having a carbonate bond in a polymer main chain thereof and having two or more hydroxy groups in an end or side chain thereof), a vinyl chloride-vinyl acetate copolymer resin, a vinyl chloride-vinyl acetate-acrylic copolymer resin, a chlorinated propylene resin, a nitrocellulose resin, and a cellulose acetate resin. These can be used singly or in a combination of plural kinds thereof. In addition, besides the one-component curing type resin, for example, resins of various types such as a two-component curing type resin accompanied with a curing agent such as an isocyanate compound, e.g., tolylene diisocyanate (TDI), diphenylmethane diisocyanate (MDI), hexamethylene diisocyanate (HDI), isophorone diisocyanate (IPID), and xylylene diisocyanate (XDI), can be used.

As the colorant, from the viewpoints of coloring and masking a base color of the adherend and enhancing the designability, the white pigments exemplified as the colorant to be used for the aforementioned base material are preferably used. The content of the white pigment in the decorative layer is preferably 5 parts by mass or more and 90 parts by mass or less, more preferably 15 parts by mass or more and 80 parts by mass or less, and still more preferably 30 parts by mass or more and 70 parts by mass or less based on 100 parts by mass of the resin constituting the decorative layer.

Similar to the base material, a colorant other than the white pigment, for example, an inorganic pigment such as iron black, chrome yellow, titan yellow, red iron oxide, cadmium red, ultramarine blue, and cobalt blue; an organic pigment or dye such as quinacridone red, isoindolinone yellow, a nickel azo complex, and phthalocyanine blue; a metal pigment composed of a scaly foil piece of aluminum, brass, etc.; and an iridescent (pearl) pigment composed of a scaly foil piece of titanium dioxide-coated mica, basic lead carbonate, etc., can also be used.

From the viewpoint of enhancing the weather resistance, the decorative layer preferably contains a weathering agent such as an ultraviolet absorber and a light stabilizer, and more preferably contains a light stabilizer.

Examples of the ultraviolet absorber and the light stabilizer include the ultraviolet absorbers and the light stabilizers which may be contained in the base material and the surface-protecting layer, respectively. From the viewpoint of enhancing the weather resistance, as the content of the ultraviolet absorber, the same range as in the content in the surface-protecting layer can be exemplified. In addition, the content of the light stabilizer is preferably 0.1 parts by mass or more and 10 parts by mass or less, more preferably 0.2 parts by mass or more and 5 parts by mass or less, still more preferably 0.3 parts by mass or more and 3 parts by mass or less, and especially preferably 0.5 parts by mass or more and 2 parts by mass or less based on 100 parts by mass of the resin constituting the base material.

In the case of including a pictorial pattern layer as the decorative layer, examples of the pattern include a wood grain pattern, a stone grain pattern imitating a surface of rock such as a marble pattern (for example, a travertine marble pattern), a cloth pattern imitating a texture or fabric pattern, a tile pattern, and a brickwork pattern as well as a pattern such as a parquetry or a patchwork obtained by complexing them. Such a pattern is typically formed by polychrome printing with process colors of yellow, red, blue, and black and, in addition, it is also formed by polychrome printing and the like with spot colors, the polychrome printing being performed by preparing blocks of individual colors constituting the pattern.

Though a thickness of the decorative layer may be suitably selected according to a desired pictorial pattern. From the viewpoints of coloring and masking a base color of the adherend and enhancing the designability, it is preferably 0.5 μm or more and 20 μm or less, more preferably 1 μm or more and 10 μm or less, and still more preferably 2 μm or more and 5 μm or less.

(Resin Layer)

The resin layer is a layer which is preferably provided, if desired, from the viewpoints of protecting the decorative layer and enhancing the work characteristics, the scratch resistance, and the weather resistance.

As the resin constituting the resin layer, for example, there are preferably exemplified a polyolefin resin, a polyester resin, an acrylic resin, a polycarbonate resin, a polyurethane resin, a polystyrene resin, a vinyl chloride resin, and a vinyl acetate resin. Above all, from the viewpoint of enhancing the work characteristics, the scratch resistance, and the weather resistance, a polyolefin resin and a polyester resin are preferred, and a polyolefin resin is more preferred. As the polyolefin resins, there are exemplified the resins exemplified as the resin which may constitute the base material, and above all, a polypropylene resin is preferred.

The resin layer may be provided between the base material sheet and the surface-protecting layer, and in the case of including the decorative layer, from the viewpoint of protecting the decorative layer, it is preferred that the resin layer is provided between the decorative layer and the surface-protecting layer.

The resin layer may be transparent or may be opaque, and in the case of providing the resin layer between the decorative layer and the surface-protecting layer, from the viewpoint of making the decorative layer more clearly visible, it is preferred that the resin layer is transparent. Here, the term "transparent" includes not only "colorless transparency" but also "colored transparency" and "semitransparency". In addition, in the case where the resin layer is colored, as a colorant to be used, there are preferably exemplified the same colorants as those which are used for the aforementioned base material, and the white pigment can be preferably used.

The resin layer may be blended with an additive, as the need arises, and for example, those exemplified as the

additive which may be blended in the aforementioned base material can be used. From the viewpoint of enhancing the weather resistance of the decorative sheet of the present invention, among the aforementioned additives, used of the weathering agent such as the ultraviolet absorber and the light stabilizer, is preferred, and use of the light stabilizer is especially preferred.

As the ultraviolet absorber and the light stabilizer, the ultraviolet absorbers and the light stabilizers exemplified as those which may be used in the base material and the surface-protecting layer can be exemplified, respectively. From the viewpoint of enhancing the weather resistance, the content of the ultraviolet absorber in the resin layer is preferably 0.1 parts by mass or more and 15 parts by mass or less, more preferably 0.2 parts by mass or more and 10 parts by mass or less, and still more preferably 0.3 parts by mass or more and 5 parts by mass or less based on 100 parts by mass of the resin constituting the resin layer. In addition, from the viewpoint of enhancing the weather resistance, as the content of the light stabilizer, the same range as in the content in the base material can be exemplified.

From the viewpoints of protecting the decorative layer and enhancing the work characteristics, the scratch resistance, and the weather resistance, a thickness of the resin layer is preferably 10 μm or more and 150 μm or less, more preferably 30 μm or more and 120 μm or less, and still more preferably 50 μm or more and 100 μm or less.

From the viewpoints of protecting the decorative layer and obtaining excellent scratch resistance, it is preferred to make the resin layer thicker than the base material sheet.

For the purposes of enhancing interlayer adhesiveness between the resin layer and other layers and so on, one or both surfaces of the resin layer can be subjected to a surface treatment such as a physical surface treatment, e.g., an oxidation method and a surface roughening method, and a chemical surface treatment. As such a physical or chemical surface treatment, the same method as in the surface treatment of the aforementioned base material is preferably exemplified.

For the purposes of enhancing the interlayer adhesiveness between the resin layer and other layer and furthermore, obtaining an effect for suppressing the influence of the white pigment, and so on, a treatment of forming a primer layer on one or both surfaces of the resin layer, or other treatment may be applied. The primer layer is mentioned later.

(Primer Layer)

The decorative sheet of the present invention can be provided with a primer layer, as the need arises. In the primer layer, an effect to be required is different depending upon a place to be provided, and the primer layer is provided chiefly for the purpose of obtaining an effect for enhancing the interlayer adhesiveness and an effect for suppressing the influence of the white pigment.

For example, in the case where the primer layer is provided between the base material and the surface-protecting layer, excellent weather resistance of the surface-protecting layer is obtained due to an effect for enhancing the interlayer adhesiveness between the base material and the surface-protecting layer as well as an effect for suppressing the influence of the white pigment contained in the base material. In the case where the resin layer is provided and also the case where the primer layer is provided between the resin layer and the surface-protecting layer, an effect for enhancing the interlayer adhesiveness between the resin layer and the surface-protecting layer as well as an effect for suppressing the influences of the white pigments contained in the base material and the decorative layer is obtained. In the case where the decorative layer and the resin layer are provided and also the case where the primer layer is provided between the decorative layer and the resin layer, excellent weather resistance is obtained due to an effect for enhancing the interlayer adhesiveness between the decorative layer and the resin layer as well as an effect for suppressing the influence of the white pigment contained in the decorative layer. In addition, in the case where the primer layer is provided on the surface of the base material on the opposite side to the surface-protecting layer side (the primer layer in such a case is also referred to as "rear surface primer layer"), an effect for enhancing the interlayer adhesiveness between the base material and the adherend as well as an effect for suppressing the influence of the white pigment contained in the base material against the adherend is obtained.

In the decorative sheet of the present invention, it is preferred that the primer layer is provided between the base material and the surface-protecting layer; and that in the case of including the resin layer, the primer layer is provided between the resin layer and the surface-protecting layer and on the surface of the base material on the opposite side to the surface-protecting layer side.

For formation of the primer layer, a resin composition obtained by suitably mixing a binder with a solvent, a stabilizer, a plasticizer, a catalyst, a curing agent, an ultraviolet absorber, a light stabilizer, and so on.

As the binder, for example, there are preferably exemplified those exemplified as the binder which may be used for the aforementioned decorative layer, namely, a urethane resin, an acrylic polyol resin, an acrylic resin, an ester resin, an amide resin, a butyral resin, a styrene resin, a urethane-acrylic copolymer, a polycarbonate-based urethane-acrylic copolymer (a urethane-acrylic copolymer derived from a polymer (polycarbonate polyol) having a carbonate bond in a polymer main chain thereof and having two or more hydroxy groups in an end or side chain thereof), a vinyl chloride-vinyl

acetate copolymer resin, a vinyl chloride-vinyl acetate-acrylic copolymer resin, a chlorinated propylene resin, a nitrocellulose resin (cellulose nitrate), and a cellulose acetate resin. These can be used singly or in a combination of plural kinds thereof. For example, a mixture of a polycarbonate-based urethane-acrylic copolymer and an acrylic polyol resin can be used as the binder.

Besides the one-component curing type resin, for example, resins of various types such as a two-component curing type resin accompanied with a curing agent such as an isocyanate compound, e.g., tolylene diisocyanate (TDI), diphenylmethane diisocyanate (MDI), hexamethylene diisocyanate (HDI), isophorone diisocyanate (IPID), and xylylene diisocyanate (XDI), can be used.

From the viewpoint of enhancing the weather resistance, it is preferred that the primer layer contains a weathering agent such as an ultraviolet absorber and a light stabilizer. As the ultraviolet absorber and the light stabilizer, the ultraviolet absorbers and the light stabilizers exemplified as those which may be contained in the base material and the surface-protecting layer can be exemplified, respectively.

The content of the ultraviolet absorber in the primer layer is preferably 1 part by mass or more and 40 parts by mass or less, more preferably 5 parts by mass or more and 35 parts by mass or less, still more preferably 10 parts by mass or more and 30 parts by mass or less, and especially preferably 15 parts by mass or more and 25 parts by mass or less based on 100 parts by mass of the resin constituting the primer layer.

The content of the light stabilizer in the primer layer is preferably 0.5 parts by mass or more and 20 parts by mass or less, more preferably 1 part by mass or more and 15 parts by mass or less, still more preferably 1.5 parts by mass or more and 10 parts by mass or less, and especially preferably 2 parts by mass or more and 8 parts by mass or less based on 100 parts by mass of the resin constituting the primer layer. When the contents of the ultraviolet absorber and the light stabilizer in the primer layer fall within the foregoing ranges, respectively, an excellent addition effect is obtained.

From the viewpoints of enhancing the interlayer adhesiveness and obtaining an effect for suppressing the influence of the white pigment, a thickness of the primer layer is preferably 1 μm or more and 10 μm or less, more preferably 2 μm or more and 8 μm or less, and still more preferably 3 μm or more and 6 μm or less.

(Content of Ultraviolet Absorber)

In the decorative sheet of the present invention, in the case of including at least one of the resin layer and the primer layer between the base material and the surface-protecting layer, from the viewpoint of obtaining more excellent weather resistance, it is preferred that the surface-protecting layer and at least one of the resin layer and the primer layer contain an ultraviolet absorber.

In this case, it is preferred that the content ($M_1$) of the ultraviolet absorber in at least one layer of the resin layer and the primer layer is higher than the content ($M_2$) of the ultraviolet absorber in the surface-protecting layer, namely a relation represented by the following inequality is satisfied.

$$\text{Content }(M_1) > \text{Content }(M_2)$$

When the content of the ultraviolet absorber in at least one layer of the resin layer and the primer layer and the content of the ultraviolet absorber in the surface-protecting layer have the aforementioned relation, it becomes possible to further suppress the worsening of the weather resistance to be caused due to bleed-out of the ultraviolet absorber, or the like, and the weather resistance can be enhanced. By allowing a larger amount of the ultraviolet absorber in the resin layer and/or the primer layer sandwiched between the base material and the surface-protecting layer and forming the surface-protecting layer as a cure product of a curable resin composition, the bleed-out of the ultraviolet absorber in not only the surface-protecting layer but also the resin layer and/or the primer layer is suppressed, and the content of the ultraviolet absorber to be retain in the decorative sheet can be maintain even by long-term use, and therefore, excellent weather resistance is obtained.

Here, the "content of the ultraviolet absorber in the layer" means the "content of the ultraviolet absorber based on 100 parts by mass of the resin constituting the layer". In addition, the matter that the "content ($M_1$) of the ultraviolet absorber in at least one layer of the resin layer and the primer layer is higher than the content ($M_2$) of the ultraviolet absorber in the surface-protecting layer" means that (i) in the case where the decorative sheet includes either one of the resin layer or the primer layer, the content ($M_1$) of the ultraviolet absorber in the resin layer or the primer layer is higher than the content ($M_2$) of the ultraviolet absorber in the surface-protecting layer; (ii) in the case where the decorative sheet includes the resin layer and the primer layer and also the case where either one layer of the resin layer or the primer layer contains the ultraviolet absorber, similar to the aforementioned (i), the content ($M_1$) of the ultraviolet absorber contained in either one of the layers is higher than the content ($M_2$) of the ultraviolet absorber in the surface-protecting layer; and (iii) in the case where the decorative sheet includes the resin layer and the primer layer and also the case where the resin layer and the primer layer contain the ultraviolet absorber, the content in the layer where the content of the ultraviolet absorber in at least one layer of

the resin layer and the primer layer is highest is defined as the "content ($M_1$)", and the content ($M_1$) is higher than the content ($M_2$) of the ultraviolet absorber in the surface-protecting layer.

With respect to the aforementioned (iii), in the case of including the resin layer and the decorative layer, there may be a case where the primer layer is provided in two or more places as seen, for example, between the resin layer and the decorative layer and between the resin layer and the surface-protecting layer. Namely, two or more primer layers exist. In the aforementioned (iii), the case where the two or more primer layers exist in this way is included, too, and for example, the case where the ultraviolet absorber is contained in only the two primer layers, the case where the ultraviolet absorber is contained in every one of the primer layer and the resin layer, and the case where the ultraviolet absorber is contained in all of the primer layers and the resin layer are included. In addition, the relation between the content ($M_1$) and the content ($M_2$) is a relation regarding the resin layer and the primer layer existing between the base material and the surface-protecting layer, and the content of the ultraviolet absorber in the rear surface primer layer to be provided on the surface of the base material on the opposite side to the side where the surface-protecting layer is provided is not taken as the content ($M_1$) into consideration.

In the case of the aforementioned (iii), the content of the ultraviolet absorber in one layer of the resin layer and the primer layer has only to be higher than the content of the ultraviolet absorber in the surface-protecting layer, and it is preferred that the content of the ultraviolet absorber in the both layers of the resin layer and the primer layer is higher than the content of the ultraviolet absorber in the surface-protecting layer. In addition, with respect to the resin layer and the primer layer, it is preferred that the content ($M_{11}$) of the ultraviolet absorber in the nearest layer (primer layer) to the base material is higher than the content ($M_{12}$) of the ultraviolet absorber in the resin layer, the content of the ultraviolet absorber in the respective layers successively decreases from the base material side towards the surface-protective layer side, and the content ($M_{11}$) of the ultraviolet absorber of the primer layer located on the nearest side to the surface-protective layer is still higher than the content ($M_2$) of the surface-protecting layer, namely a relation represented by the following inequality is satisfied.

$$\text{Content } (M_{11}) > \text{Content } (M_{12}) > \text{Content } (M_2)$$

The sum total ($M_1 + M_2$) of the content ($M_1$) of the ultraviolet absorber in at least one layer of the resin layer and the primer layer and the content ($M_2$) of the ultraviolet absorber in the surface-protecting layer is preferably 0.5 parts by mass or more, more preferably 1 part by mass or more, still more preferably 5 parts by mass or more, and yet still more preferably 10 parts by mass or more. In addition, an upper limit thereof is preferably 40 parts by mass or less, more preferably 30 parts by mass or less, and still more preferably 25 parts by mass or less. Here, in the case where the resin layer and the primer layer contain the ultraviolet absorber, the content ($M_1$) is determined according to the aforementioned (i) to (iii). When the sum total ($M_1 + M_2$) falls within the aforementioned range, excellent weather resistance is obtained without impairing the function of each layer of the resin layer, the primer layer, and the surface-protecting layer.

A ratio ($M_1/M_2$) of the content ($M_1$) of the ultraviolet absorber in at least one layer of the resin layer and the primer layer to the content ($M_2$) of the ultraviolet absorber in the surface-protecting layer is preferably 1.1 or more, more preferably 3 or more, still more preferably 5 or more, and especially preferably 10 or more. In addition, an upper limit thereof is preferably 35 or less, more preferably 30 or less, still more preferably 25 or less, and especially preferably 20 or less. When the ratio ($M_1/M_2$) falls within the aforementioned range, excellent work characteristics, weather resistance, and scratch resistance are obtained. Here, in the case where the resin layer and the primer layer contain the ultraviolet absorber, the content ($M_1$) is determined according to the aforementioned (i) to (iii).

(Adhesive Layer)

The decorative sheet of the present invention can include an adhesive layer, as the need arises. In particular, in the case where the decorative sheet of the present invention includes the resin layer, it is effective to provide the adhesive layer at the time of enhancing the interlayer adhesiveness between the resin layer and the decorative layer. As an adhesive constituting the adhesive layer, adhesives which are typically used for a decorative sheet can be used without limitations.

Examples of the adhesive include a urethane-based adhesive, an acrylic adhesive, an epoxy-based adhesive, and a rubber-based adhesive. Above all, a urethane-based adhesive is preferred from the standpoint of an adhesive force. Examples of the urethane-based adhesive include an adhesive utilizing a two-component curing type urethane resin containing a polyol compound of every sort such as a polyether polyol, a polyester polyol, and an acrylic polyol, and a curing agent such as the aforementioned isocyanate compound of every sort. In addition, an acrylic-polyether-vinyl acetate-based resin or the like is also a suitable adhesive capable of readily revealing adhesive properties upon heating and maintaining an adhesive strength even when used at a high temperature.

From the viewpoint of sufficient adhesive properties, a thickness of the adhesive layer is preferably 0.1 μm or more and 30 μm or less, more preferably 1 μm or more and 15 μm or less, and still more preferably 2 μm or more and 10 μm

or less.

(Concave Part)

It is preferred that the decorative sheet of the present invention includes a concave part on the surface of the surface-protecting layer on the opposite side to the base material side (also referred to as "surface-side surface"). In view of the fact that the decorative sheet of the present invention includes the concave part, a sense of extravagance accompanying enhancement in a texture (sense of touch) is obtained, and the designability is enhanced.

As shown in Fig. 2, the concave part may exist on the surface of the surface-protecting layer on the opposite side to the base material side, and a depth of the concave part may be one staying within the surface-protecting layer and may be also one reaching the base material. From the viewpoint of obtaining excellent texture (sense of touch), it is preferred that not only one staying within the surface-protecting layer but also one reaching the resin layer, one reaching the decorative layer, and one reaching the base material are combined.

From the viewpoint of enhancing the designability, a maximum depth D of the concave part and a total thickness T of the decorative sheet have a relation of ($0.15 \times T \leq D \leq T$). That is, a ratio D/T of the depth D of the concave part to the total thickness T of the decorative sheet is 0.15 or more and 1 or less. In addition, from the same viewpoint as this, the relation between the depth D of the concave part and the total thickness T of the decorative sheet is more preferably ($0.2 \times T \leq D \leq 0.9 \times T$), and still more preferably ($0.25 \times T \leq D \leq 0.8 \times T$). That is, the ratio D/T of the depth D of the concave part to the total thickness T of the decorative sheet is preferably 0.2 or more and 0.9 or less, and more preferably 0.25 or more and 0.8 or less.

A maximum depth of the concave part is relatively variable with the total thickness of the decorative sheet. More specific depth thereof is preferably 10 μm or more and 120 μm or less, more preferably 20 μm or more and 110 μm or less, and still more preferably 30 μm or more and 100 μm or less. When the concave part has such a maximum depth, on working the concave part, for example, emboss working, the decorative sheet is free from breakage, and the concave part is free from finishing in a collapsed state, so that a sense of extravagance accompanying enhancement in a texture (sense of touch) is obtained, and the design ability is enhanced.

Here, as for the measurement of a maximum depth D of the concave part, with respect to the concave shape at arbitrary 30 points, the height from the lowest point of the concave part to the surface of the surface-protecting layer was measured with a surface roughness form measuring machine under a measurement condition of a cut-off value: 2.50 mm, a kind of cut-off filter: 2RC, and a tilt correction method: straight line, and a deepest one was defined as the maximum depth.

Examples of the pattern of the concave part include wood grain conduit groove, stone slab surface irregularity, cloth surface texture, pear-skin finish, sand grain, hair line, and line screen groove. From the viewpoint of enhancing the designability, the pattern of the concave part is preferably a pattern synchronized with the pictorial pattern of the decorative layer. For example, in the case where the pictorial pattern layer has a wood grain pattern, by selecting a wood grain conduit groove as the pattern of the concave part and synchronizing the wood grain of the pictorial pattern layer with the wood grain of the concave part, a decorative sheet and a decorative material, each being more realistic and rich in texture and having a sense of extravagance, are obtained.

(Production Method of Decorative Sheet)

With respect to a production method of the decorative sheet of the present invention, the production method is described by reference to a decorative sheet including a base material, a decorative layer, an adhesive layer, a resin layer, a primer layer, and a surface-protecting layer in this order, the foregoing decorative sheet being a preferred embodiment as the decorative sheet of the present invention.

The decorative sheet of the present invention can be, for example, produced through (1) a step of providing the base material with the decorative layer, (2) a step of providing the resin layer on the decorative layer, and (3) a step of coating a curable resin composition on the resin layer, followed by curing to form the surface-protecting layer in this order.

The step (1) is a step of providing the decorative layer on the base material. The decorative layer is formed by coating inks to be used for formation of the decorative layer on the base material, thereby providing the desired colored layer and pictorial pattern layer. The coating of the inks is performed by a known method such as a gravure printing method, a bar coating method, a roll coating method, a reverse roll coating method, and a comma coating method, and preferably a gravure printing method.

When the base material is subjected to a surface treatment, in the case of forming the decorative layer and also the case of providing the primer layer between the base material and the decorative layer, the primer layer may be provided before formation of the decorative layer. In the case of providing a rear surface primer layer on the surface (rear surface) of the base material on the opposite side to the decorative layer side, the primer layer may be provided after formation of the decorative layer. The primer layer can be, for example, formed by coating the resin composition constituting the primer layer by a known method such as a gravure printing method, a bar coating method, a roll coating method, a reverse roll

coating method, and a comma coating method.

The step (2) is a step of providing the resin layer on the decorative layer. The resin layer can be formed in such a manner that an adhesive is coated on the base material including the decorative layer, as the need arises, to form the adhesive layer, and then, the resin layer is laminated by means of bonding and press bonding with a resin composition constituting the resin layer by a method such as extrusion lamination, dry lamination, wet lamination, and thermal lamination.

In the case of subjecting the resin layer to a surface treatment, the surface treatment may be performed after providing the resin layer.

In the case of providing the primer layer between the resin layer and the surface-protecting layer, the primer layer may be provided by using the resin composition constituting the primer layer after providing the resin layer.

The step (3) is a step of coating the curable resin composition on the resin layer, followed by curing to form the surface-protecting layer.

The surface-protecting layer is obtained by coating an ionizing radiation-curable resin composition containing the aforementioned ionizing radiation-curable resin on the resin layer or the primer layer optionally provided on the resin layer, followed by curing. In the case of not providing the resin layer, after providing the decorative layer on the base material sheet, the curable resin composition may be coated and cured to form the surface-protecting layer.

The coating of the resin composition for formation of the surface-protecting layer is preferably performed by a known method such as gravure coating, bar coating, roll coating, reverse roll coating, and comma coating, and more preferably formed by gravure coating, such that the thickness after curing becomes a predetermined thickness.

In the case of using the ionizing radiation resin composition for formation of the surface-protecting layer, an uncured resin layer formed through coating of the resin composition becomes the surface-protecting layer by irradiating an ionizing radiation such as an electron beam and an ultraviolet ray, to provide a cured product. Here, in the case of using an electron beam as the ionizing radiation, an accelerating voltage thereof may be suitably selected according to the thickness of the resin or layer to be used. Typically, it is preferred to cure the uncured resin layer at an accelerating voltage of about 70 to 300 kV.

An exposure dose is preferably a dose at which a crosslinking density of the ionizing radiation-curable resin is saturated, and it is selected within a range of typically 5 to 300 kGy (0.5 to 30 Mrad), and preferably 10 to 50 kGy (1 to 5 Mrad).

The electron beam source is not particularly limited, and for example, there can be used various electron beam accelerators such as a Cockloft-Walton type, a van de Graaff type, a resonance transformer type, an insulated core transformer type, a linear type, a Dynamitron type, and a high frequency type.

In the case of using an ultraviolet ray as the ionizing radiation, one including an ultraviolet ray having a wavelength of 190 to 380 nm is radiated. The ultraviolet ray source is not particularly limited, and for example, a high pressure mercury lamp, a low pressure mercury lamp, a metal halide lamp, and a carbon arc are used.

In the case of using a thermosetting resin composition for formation of the surface-protecting layer, the surface-protecting layer may be formed by applying a heat treatment according to the resin composition to be used, followed by curing.

In the case of forming the concave part in the surface-protecting layer, for example, taking into consideration easiness of the operations, it is preferred to adopt emboss working. The emboss working may be performed by a typical method of using a known embossing machine of a sheet type or a rotary type.

In the case of performing emboss working, the emboss working can be performed by heating the decorative sheet at preferably 80°C or higher and 260°C or lower, more preferably 85°C or higher and 160°C or lower, and still more preferably 100°C or higher and 140°C or lower and pressing an emboss plate on the decorative sheet.

[Decorative Material]

The decorative material of the present invention includes an adherend and the aforementioned decorative sheet of the present invention, and specifically, it is one obtained by laminating a surface of the adherend requiring a decoration and a surface of the decorative sheet opposite to the surface of the base material side. That is, the decorative material of the present invention includes at least the adherend, the base material, and the surface-protecting layer in this order. Fig. 3 shows a schematic view showing a cross section of an example of a preferred embodiment of the decorative material of the present invention. A decorative material 20 of the present invention as shown in Fig. 3 includes an adherend 21, an adhesive layer 22, and the decorative sheet 10 of the present invention in this order.

(Adherend)

Examples of the adherend include a board of a material of every sort such as a flat plate and a curved plate, an article having a three-dimensional shape, and a sheet (or a film). Examples thereof include woody members to be used as

a board or an article having a three-dimensional shape such as lumber single panels, which are produced from various materials such as Japanese cedar, cypress, zelkova tree, pine tree, and lauan, lumber plywoods, particle boards, and middle density fiberboards (MDF); metal members to be used for boards of iron, aluminum, etc., or steel plates, articles having a three-dimensional shape, or sheets; ceramic members to be used for boards or articles having a three-dimensional shape such as glass, ceramics, e.g. porcelain, non-cement ceramic-based material, e.g., gypsum, and non-porcelain ceramic-based material, e.g., ALC (autoclaved lightweight concrete); and resin members to be used for boards, articles having a three-dimensional shape, or sheets such as an acrylic resin, a polyester resin, a polystyrene resin, and a polyolefin resin, e.g., polypropylene, an ABS (acrylonitrile-butadiene-styrene copolymer) resin, a phenol resin, a vinyl chloride resin, a cellulose resin, and a rubber. In addition, these members can be used singly or in combination of plural kinds thereof.

The adherend may be suitably selected from the foregoing materials according to an application. In the case of using for interior materials of buildings such as a wall, a ceiling, or a floor, and fittings or fixture members such as a window frame, a door, a handrail, a crown molding, a skirting board, and a molding, an adherend composed of at least one member selected from a woody member, a metal member, and a resin member is preferred. In the case of using for exterior materials, such a front door, and fittings such as a window frame and a door, an adherend composed of at least one member selected from a metal member and a resin member is preferred.

A thickness of the adherend may be suitably selected according to the application and the material, and it is preferably 0.1 mm or more and 10 mm or less, more preferably 0.3 mm or more and 5 mm or less, and still more preferably 0.5 mm or more and 3 mm or less.

(Adhesive Layer)

In order to obtain excellent adhesive properties, the adherend and the decorative sheet are preferably stuck to each other via an adhesive layer. That is, the decorative material of the present invention is preferably a member including at least the adherend, the adhesive layer, the base material, and the surface-protecting layer in this order.

The adhesive to be used for the adhesive layer is not particularly limited, and a known adhesive can be used. For example, there are preferably exemplified adhesives such as a heat-sensitive adhesive and a pressure-sensitive adhesive. Examples of a resin which is used for the adhesive constituting this adhesive layer include an acrylic resin, a polyurethane resin, a vinyl chloride resin, a vinyl acetate resin, a vinyl chloride-vinyl acetate copolymer resin, a styrene-acrylic copolymer resin, a polyester resin, and a polyamide resin. These can be used singly or in combination of plural kinds thereof. In addition, two-component curing type resin polyurethane-based adhesive and polyester-based adhesive accompanied with a curing agent such as an isocyanate compound, are also applicable.

A pressure-sensitive adhesive can also be used for the adhesive layer. As the pressure-sensitive adhesive, an acrylic, urethane-based, silicone-based, or rubber-based pressure-sensitive adhesive can be suitably selected and used.

The adhesive layer can be formed by coating a solution of the aforementioned resin, or a coatable form of the resin such as an emulsion, by a method such as a gravure printing method, a screen printing method, and a reverse coating method using a gravure plate, followed by drying.

A thickness of the adhesive layer is not particularly limited. From the viewpoint of obtaining excellent adhesive properties, it is preferably 1 μm or more and 100 μm or less, more preferably 5 μm or more and 50 μm or less, and still more preferably 10 μm or more and 30 μm or less.

(Production Method of Decorative Material)

The decorative material can be produced through a step of laminating the decorative sheet and the adherend.

This step is a step of laminating the adherend and the decorative sheet of the present invention, and a surface of the adherend requiring a decoration and a surface of the decorative sheet are laminated while opposing to each other. As a method of laminating the adherend and the decorative sheet, for example, there are preferably exemplified a laminating method of pressuring the decorative sheet onto the adherend in a plate-like form by using a pressure roll while allowing an adhesive to intervene therebetween; lapping work of pressure bonding the decorative sheet onto plural side faces constituting the adherend successively by plural rolls having a different direction from each other while feeding the decorative sheet while allowing an adhesive to intervene therebetween, thereby undergoing lamination; and vacuum molding work of heating the decorative sheet fixed in a fixing frame by a heater via a silicone rubber sheet until reaching a temperature at which the decorative sheet is softened, pressing the heated and softened decorative sheet onto a vacuum forming mold and simultaneously sucking air from the vacuum forming mold by using a vacuum pump or the like, thereby allowing the decorative sheet to close contact with the vacuum forming mold.

In the laminating work or lapping work, in the case of using a hot-melt adhesive (heat-sensitive adhesive), though a heating temperature varies with the kind of the resin constituting the adhesive, it is preferably 160°C or higher or 200°C or lower, and the heating temperature is preferably 100°C or higher and 130°C or lower when using the reactive hot-metal

adhesive. In addition, in the case of vacuum forming work, it is general to perform the work while heating, and the heating temperature is preferably 80°C or higher and 130°C or lower, and more preferably 90°C or higher and 120°C or lower.

The thus obtained decorative material can be arbitrarily cut, and the surface or butt end portion can be subjected to arbitrary decoration such as grooving and chamfering, by using a cutting machine such as a router and a cutter. In addition, after sticking the decorative sheet onto a steel plate or the like, bending work such as V-cut work and lapping work can also be applied. The decorative material can be used for various applications, for example, interior materials or exterior members of buildings such as a wall, a ceiling, and a floor, and fittings or fixture members such as a window frame, a door, a handrail, a skirting board, a crown molding, and a molding, as well as for surface decorative plates for kitchen, furniture or cabinets of light electrical appliances, OA instruments, etc., and interior materials or exterior members of vehicles.

## Examples

Next, the present invention is described in more detail by reference to Examples, but it should be construed that the present invention is by no means limited by these Examples.

### (Evaluation and Measurement Methods)

### (1) Measurement of Martens Hardness

With respect to a decorative sheet obtained in each of the Examples and Comparative Examples, its Martens hardness thereof was measured by the following method.

Using an ultra microhardness tester (microhardness tester, "PICODENTOR HM-500", manufactured by Fischer Instruments K.K.), a diamond indenter in a pyramid shape was indented into a sample (surface of the surface-protecting layer) at room temperature (23°C) while continuously increasing a load; a test load F (N) when an indentation depth reached 2 μm was measured; a surface area A ($mm^2$) of a dent of the pyramid shape formed on the surface was calculated from a length of a diagonal line of the dent; and the test load F (N) was divided by the surface area A, thereby calculating the Martens hardness.

### (2) Evaluation of Work Characteristics (Lapping Work)

With respect to a decorative sheet obtained in each of the Examples and Comparative Examples, the state of a corner part (bent part) was observed through visual inspection and evaluated according to the following criteria. In the table, in the case of designating a mark "+" together with the following criterion, it is to be noted that the mark "+" means "more excellent but not reaching one-stage up evaluation". For example, the mark "$B^+$" means that the evaluation is more excellent than "B" but does not reach "A".

A: In the corner part (bent part), no change in appearance was confirmed.
B: In the corner part (bent part), slight whitening was confirmed, but cracking was not confirmed.
C: In the corner part (bent part), slight whitening and cracking were confirmed.
D: In the corner part (bent part), remarkable whitening and cracking were confirmed.

### (3) Evaluation of Weather Resistance

With respect to a decorative sheet obtained in each of the Examples and Comparative Examples, a weather resistance test was performed with a sunshine weatherometer ("WEL-300", manufactured by Suga Test Instruments Co., Ltd.) by allowing to stand for 6,000 hours under a rainfall condition of 18 minutes during 120 minutes at a black panel temperature of 63°C. The appearance of the decorative material after the weather resistance test was observed through visual inspection and evaluated according to the following criteria.

A: No change in appearance was confirmed.
B: A very slight change in color tone was confirmed.
C: A slight change in color tone was confirmed.
D: At least one of a remarkable change in color tone, floating between the respective layers, and cracking was confirmed.

### (4) Evaluation of Scratch Resistance

With respect to a decorative sheet obtained in each of the Examples and Comparative Examples, a rubbing test

was performed on the surface thereof by reciprocating a steel wool ("BON STAR #0000", manufactured by Nihon Steel Wool Co., Ltd.) ten times under a load of 300 g/$m^2$. The state of the surface after the test was observed through visual inspection and evaluated according to the following criteria.

A: No scratch was observed, and no change in gloss was confirmed.
B: A very slight scratch and a very slight change in gloss were confirmed.
C: A slight scratch and a slight change in gloss were confirmed.
D: A scratch was confirmed, and a remarkable change in gloss was confirmed.

(5) Evaluation of Designability

With respect to a decorative sheet obtained in each of the Examples and Comparative Examples, the designability was evaluated according to the following criteria.

A: High design ability due to a texture owing to a concave part was confirmed.
B: Sufficient design ability due to a texture owing to a concave part was confirmed.
C: Though a texture owing to a concave part was small, the designability was confirmed.
D: No texture owing to a concave part was observed, and the designability was low.

Example 1

A polypropylene resin sheet having been subjected to a two-sided corona discharge treatment (thickness: 60 μm, white colored resin sheet (white pigment: rutile-type titanium oxide (average particle diameter: 0.25 μm), content: 10% by mass)) was used as a base material; a printing ink (containing 40% by mass of rutile-type titanium oxide (average particle diameter: 0.25 μm) as a white pigment) containing a two-component curing type acrylic-urethane resin as a binder was coated on one surface of the base material by the gravure printing method, to provide a decorative layer having a wood grain pattern (thickness: 3 μm); and a two-component curing type urethane-cellulose nitrate mixed resin composition was coated on the other surface, to form a rear surface primer layer (thickness: 2 μm).

A transparent polyurethane resin-based adhesive was coated on the decorative layer to form an adhesive layer (thickness after drying: 3 μm), and a transparent polypropylene resin was subjected to hot-melt extrusion from a T-die extruder, to form a transparent resin layer (thickness: 80 μm).

Subsequently, the surface of the resin layer was subjected to a corona discharge treatment, and then, a composition obtained by mixing 100 parts by mass of the following primer layer forming resin composition and 5 parts by mass of hexamethylene diisocyanate (curing agent) was coated by the gravure printing method, to form a primer layer (thickness after drying: 4 μm).

Furthermore, the following ionizing radiation-curable resin composition was coated on the primer layer by the roll coating method, to form an uncured resin layer, and an electron beam (accelerating voltage: 175 KeV, 5 Mrad (50 kGy)) war irradiated to cure the uncured resin layer, thereby obtaining a surface-protecting layer (thickness: 5 μm). Thereafter, emboss working was applied from the surface-protecting layer side to form a wood grain conduit pattern having a concave part having a maximum depth of 50 μm, thereby obtaining a decorative sheet.

On the base material of the obtained decorative sheet, a polyurethane-based heat-sensitive adhesive (hot-melt adhesive, "PUR 704", manufactured by Kleiberit Japan K.K.) was coated to form an adhesive layer (thickness: 20 μm), and an adherend having an L-type cross-sectional shape (material: vinyl chloride resin) and the decorative sheet were stuck to each other so as to allow the decorative sheet to follow the adherend before the adhesive layer was solidified, thereby producing a decorative material. The obtained decorative sheet and decorative material were subjected to the aforementioned evaluations, and evaluation results thereof are shown in Table 1.

(Primer Layer Forming Resin Composition)

Binder: A mixture of polycarbonate-based urethane-acrylic copolymer and acrylic polyol resin
Ultraviolet absorber A: A hydroxyphenyl triazine compound represented by the aforementioned general formula (2) ("TINUVIN 479", manufactured by BASF SE): 3% by mass
Ultraviolet absorber B: A hydroxyphenyl triazine compound represented by the following general formula (3) ("TINUVIN 400", manufactured by BASF SE): 12% by mass

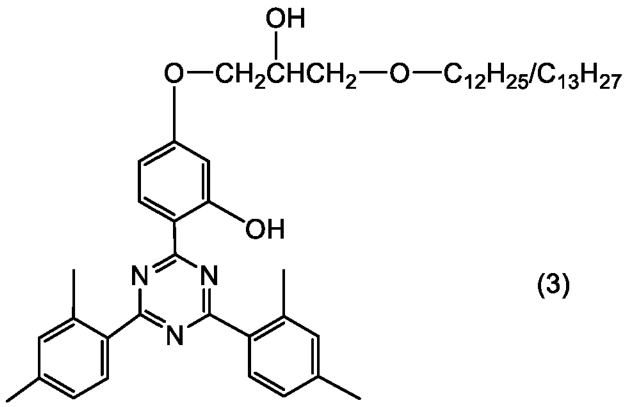

(3)

Light stabilizer a: A hindered amine light stabilizer (bis(1-octyloxy-2,2,6,6-tetramethyl-4-piperidinyl) sebacate, "TINUVIN 123", manufactured by BASF SE): 3% by mass

(Ionizing Radiation-Curable Resin Composition)

Ionizing radiation-curable resin A: A urethane acrylate oligomer (weight average molecular weight: 4,000, number of functional groups: 3)
Ultraviolet absorber A: A hydroxyphenyl triazine compound represented by the aforementioned general formula (2) ("TINUVIN 479", manufactured by BASF SE): 1% by mass
Light stabilizer a: A hindered amine light stabilizer (bis(1-octyloxy-2,2,6,6-tetramethyl-4-piperidinyl) sebacate, "TINUVIN 123", manufactured by BASF SE): 2% by mass

Examples 2 and 3 and Comparative Examples 1 and 2

Decorative sheets and decorative materials of Examples 2 and 3 and Comparative Examples 1 and 2 were produced in the same manner as in Example 1, except that in Example 1, the ionizing radiation-curable resin in the ionizing radiation-curable resin composition was changed to the following ionizing radiation-curable resins B, C, D, and E, respectively. The obtained decorative sheets and decorative materials were subjected to the aforementioned evaluations, and evaluation results thereof are shown in Table 1.

Ionizing radiation-curable resin B: A urethane acrylate oligomer (weight average molecular weight: 7,000, number of functional groups: 3)
Ionizing radiation-curable resin C: A urethane acrylate oligomer (weight average molecular weight: 3,000, number of functional groups: 3)
Ionizing radiation-curable resin D: A urethane acrylate oligomer (weight average molecular weight: 2,000, number of functional groups: 3)
Ionizing radiation-curable resin E: A urethane acrylate oligomer (weight average molecular weight: 8,000, number of functional groups: 3)

Example 4

A decorative sheet and a decorative material were produced in the same manner as in Example 1, except that in Example 1, 1% by mass of the aforementioned light stabilizer a (hindered amine light stabilizer (bis(1-octyloxy-2,2,6,6-tetramethyl-4-piperidinyl) sebacate, "TINUVIN 123", manufactured by BASF SE)) was contained in the base material. The obtained decorative sheet and decorative material were subjected to the aforementioned evaluations, and evaluation results thereof are shown in Table 1.

Example 5

A decorative sheet and a decorative material were produced in the same manner as in Example 1, except that in Example 1, 1% by mass of the aforementioned light stabilizer a (hindered amine light stabilizer (bis(1-octyloxy-2,2,6,6-tetramethyl-4-piperidinyl) sebacate, "TINUVIN 123", manufactured by BASF SE)) was contained in the printing ink to be

used for formation of the decorative layer. The obtained decorative sheet and decorative material were subjected to the aforementioned evaluations, and evaluation results thereof are shown in Table 1.

Example 6

A decorative sheet and a decorative material were produced in the same manner as in Example 1, except that in Example 1, 1% by mass of the aforementioned light stabilizer a (hindered amine light stabilizer (bis(1-octyloxy-2,2,6,6-tetramethyl-4-piperidinyl) sebacate, "TINUVIN 123", manufactured by BASF SE)) was contained in each of the base material and the printing ink to be used for formation of the decorative layer. The obtained decorative sheet and decorative material were subjected to the aforementioned evaluations, and evaluation results thereof are shown in Table 1.

Example 7

A decorative sheet and a decorative material were produced in the same manner as in Example 1, except that in Example 1, the primer layer forming resin composition was changed to a resin composition not containing the light stabilizer a, and the emboss working was applied such that the maximum depth of the concave part was 140 μm. The obtained decorative sheet and decorative material were subjected to the aforementioned evaluations, and evaluation results thereof are shown in Table 1.

Example 8

A decorative sheet and a decorative material of Example 8 were produced in the same manner as in Example 1, except that in Example 1, the ultraviolet absorber A in the ionizing radiation-curable resin composition was changed to an ultraviolet absorber C (benzotriazole-based ultraviolet absorber, 2-(5-chloro-benzotriazolyl)-6-tert-butyl-p-cresole, "TINUVIN 326", manufactured by BASF SE). The obtained decorative sheet and decorative material were subjected to the aforementioned evaluations, and evaluation results thereof are shown in Table 1.

Example 9

A decorative sheet and a decorative material were produced in the same manner as in Example 1, except that in Example 1, the emboss working was applied such that the maximum depth of the concave part was 10 μm. The obtained decorative sheet and decorative material were subjected to the aforementioned evaluations, and evaluation results thereof are shown in Table 1.

Table 1

| | | Example | | | | | | | | | Comparative Example | |
|---|---|---|---|---|---|---|---|---|---|---|---|---|
| | | 1 | 2 | 3 | 4 | 5 | 6 | 7 | 8 | 9 | 1 | 2 |
| Surface-protecting laver | Curable resin | A | B | C | A | A | A | A | A | A | D | E |
| | Ultraviolet absorber | A | A | A | A | A | A | A | C | A | A | A |
| | Light stabilizer | a | a | a | a | a | a | a | a | a | a | a |
| Primer layer | Ultraviolet absorber | A, B | A, B | A, B | A, B | A, B | A, B | A, B | A, B | A, B | A, B | A, B |
| | Light stabilizer | a | a | a | a | a | a | a | a | a | a | a |
| Decorative layer | White pigment | Rutile type titanium oxide | | | | | | | | | | |
| | Light stabilizer | - | - | - | - | a | a | - | - | - | - | - |

(continued)

| | | Example | | | | | | | | | Comparative Example | |
|---|---|---|---|---|---|---|---|---|---|---|---|---|
| | | 1 | 2 | 3 | 4 | 5 | 6 | 7 | 8 | 9 | 1 | 2 |
| Base material | White pigment | Rutile type titanium oxide | | | | | | | | | | |
| | Light stabilizer | - | - | - | a | - | a | - | - | - | - | - |
| Martens hardness, $N/mm^2$ | | 15 | 10 | 22 | 15 | 15 | 15 | 15 | 15 | 15 | 26 | 8 |
| Thickness (T) of decorative sheet, μm | | 156 | 156 | 156 | 156 | 156 | 156 | 156 | 156 | 156 | 156 | 156 |
| Maximum depth (D) of concave part, μm | | 50 | 50 | 50 | 50 | 50 | 50 | 140 | 50 | 10 | 50 | 50 |
| (D)/(T) | | 0.32 | 0.32 | 0.32 | 0.32 | 0.32 | 0.32 | 0.90 | 0.32 | 0.06 | 0.32 | 0.32 |
| Work characteristics | | A | A | A | A | A | A | B | A | A | D | A |
| Weather resistance | | B | B | B | $B^+$ | $B^+$ | A | B | C | B | D | B |
| Scratch resistance | | A | B | A | A | A | A | A | A | B | A | D |
| Designability | | B | B | B | B | B | B | A | B | C | B | B |

The decorative sheets of the present invention were excellent in the work characteristics, and when forming a decorative material by using these, a minute crack was not generated in the bend part, and as a result, the resulting decorative material were confirmed to have excellent weather resistance. In addition, the decorative sheets of the present invention were excellent in the scratch resistance and designability, and therefore, the decorative material formed by using these were confirmed to have excellent weather resistance and designability. In addition, in Example 8, though the benzotriazole-based ultraviolet absorber was used as the ultraviolet absorber in the ionizing radiation-curable resin composition, it was confirmed that when the hydroxyphenyl triazine compound used in other Examples, particularly the specified hydroxyphenyl triazine compound represented by the general formula (2) is used, excellent designability is obtained.

In addition, with respect to the maximum depth (D) of the concave part, in the decorative sheets of Examples 1 to 6 having a maximum depth (D) of the concave part of 50 μm (the maximum depth (D) of the concave part and the thickness (T) of the decorative sheet have a relation of $(D) = 0.32 \times (T)$ ($(D)/(T) = 0.32$)) and the decorative sheet of Example 7 having a maximum depth (D) of the concave part of 140 μm ($(D) = 0.90 \times (T)$, ($(D)/(T) = 0.90$), an excellent texture was obtained as compared with the decorative sheet of Example 9 having a maximum depth (D) of the concave part of 10 μm ($(D) = 0.06 \times (T)$, ($(D)/(T) = 0.06$), and it was confirmed that the designability is excellent.

On the other hand, in Comparative Example 1 in which the Martens hardness was large as 26 $N/mm^2$, the work characteristics were not obtained, minute cracks were generated in the bent part, and as a result, the weather resistance was poor. In addition, in Comparative Example 2 in which the Martens hardness was small as 8 $N/mm^2$, in view of the fact that the work characteristics are obtained, the weather resistance was obtained, but the scratch resistance was poor.

In addition, in the decorative sheet of Example 1, the content of the ultraviolet absorber in the primer layer was 18.3 parts by mass based on 100 parts by mass of the curable resin constituting the primer layer, and the content of the ultraviolet absorber in the surface-protecting layer is 1.0 part by mass based on 100 parts by mass of the curable resin constituting the surface-protecting layer. That is, the content of the ultraviolet absorber in the primer layer was larger than the content of the ultraviolet absorber in the surface-protecting layer. By applying such a constitution, the bleed-out of the ultraviolet absorber was suppressed, and a larger amount of the ultraviolet absorber was retained in the decorative sheet, whereby it was confirmed to obtain more excellent weather resistance. In addition, with respect to the decorative sheets of other Examples, it may be said that the same as in the decorative sheet of Example 1 is applicable.

Industrial Applicability

The decorative sheet of the present invention has excellent work characteristics, weather resistance, and scratch resistance. The decorative material using this has excellent weather resistance and scratch resistance. Accordingly, the

decorative sheet of the present invention is suitably used for interior materials or exterior members of buildings such as a wall, a ceiling, and a floor, and fittings or fixture members such as a window frame, a door, a handrail, a skirting board, a crown molding, and a molding, as well as for surface decorative plates for kitchen, furniture, or cabinets of light electrical appliances, OA instruments, etc., and interior materials or exterior members of vehicles. Especially, the decorative sheet of the present invention is suitably used for members to be used in the environment to be exposed to direct rays of the sun, for example, an exterior member such as a front door, a window frame, or fittings, such as a door by putting its excellent scratch resistance and weather resistance to good use.

Reference Signs List

10: Decorative sheet
11: Base material
12: Decorative layer
13: Adhesive layer
14: Resin layer
15: Primer layer
16: Surface-protecting layer
17: Rear surface primer layer
18: White pigment
19: Concave part
20: Decorative material
21: Adherend
22: Adhesive layer

## Claims

**1.** A decorative sheet comprising a base material and a surface-protecting layer, wherein at least one of the base material and the surface-protecting layer contains a white pigment, the surface-protecting layer is a cured product of a curable resin composition, and a Martens hardness of the decorative sheet is 9 $N/mm^2$ or more and 25 $N/mm^2$ or less, wherein the white pigment is at least one selected from the group consisting of rutile type titanium oxide, white lead, and antimony white, and wherein the Martens hardness of the decorative sheet is determined as described in the description.

**2.** The decorative sheet according to claim 1, comprising a decorative layer between the base material and the surface-protecting layer, at least one of the base material and the decorative layer containing a white pigment.

**3.** The decorative sheet according to claim 2, wherein the base material and the decorative layer contain a white pigment.

**4.** The decorative sheet according to any one of claims 1 to 3, wherein the white pigment is rutile type titanium oxide.

**5.** The decorative sheet according to any one of claims 1 to 4, wherein the content of the white pigment in the base material is 1 part by mass or more and 50 parts by mass or less based on 100 parts by mass of a resin constituting the base material.

**6.** The decorative sheet according to any one of claims 2 to 5, wherein the content of the white pigment in the decorative layer is 5 parts by mass or more and 90 parts by mass or less based on 100 parts by mass of a resin constituting the decorative layer.

**7.** The decorative sheet according to any one of claims 1 to 6, comprising at least one of a resin layer and a primer layer between the base material and the surface-protecting layer, wherein the surface-protecting layer and the at least one layer of the resin layer and the primer layer contain an ultraviolet absorber.

**8.** The decorative sheet according to claim 7, wherein the content ($M_1$) of the ultraviolet absorber in the at least one layer of the resin layer and the primer layer is larger than the content ($M_2$) of the ultraviolet absorber in the surface-protecting layer.

**9.** The decorative sheet according to claim 7 or 8, wherein the ultraviolet absorber contained in the surface-protecting layer and the at least one layer of the resin layer and the primer layer comprises a triazine-based absorber.

**10.** The decorative sheet according to any one of claims 7 to 9, wherein the ultraviolet absorber contained in the surface-protecting layer and the at least one layer of the resin layer and the primer layer is a hydroxyphenyl triazine compound represented by the following general formula (1):

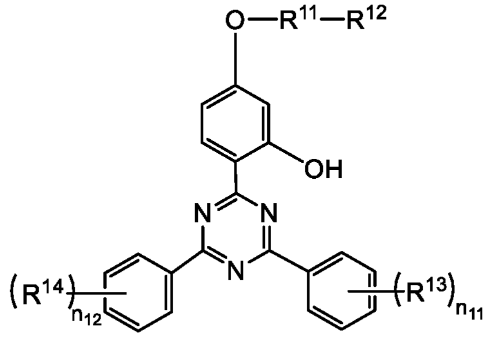

(1)

wherein $R^{11}$ is a divalent organic group; $R^{12}$ is an ester group represented by -C(=O)OR$^{15}$; $R^{13}$, $R^{14}$, and $R^{15}$ are each independently a monovalent organic group; and $n_{11}$ and $n_{12}$ are each independently an integer of 1 to 5.

**11.** The decorative sheet according to claim 10, wherein the ultraviolet absorber is a hydroxyphenyl triazine compound represented by the general formula (1) where $R^{11}$ is an alkylene group having 1 or more and 20 or less carbon atoms; $R^{12}$ and $R^{15}$ are each an alkyl ester group having an alkyl group having 1 or more and 20 or less carbon atoms; $R^{13}$ and $R^{14}$ are each an aryl group having 6 or more and 20 or less carbon atoms; and $n_{11}$ and $n_{12}$ are each 1.

**12.** The decorative sheet according to any one of claims 1 to 11, wherein the curable resin is an ionizing radiation-curable resin.

**13.** The decorative sheet according to any one of claims 1 to 12, wherein at least one of the base material and the surface-protecting layer contains a hindered amine-based light stabilizer.

**14.** The decorative sheet according to any one of claims 2 to 13, wherein the decorative layer contains a hindered amine-based light stabilizer.

**15.** The decorative sheet according to any one of claims 1 to 14, which comprises a concave part on the surface of the surface-protecting layer on the opposite side to the surface on the base material side thereof.

**16.** The decorative sheet according to claim 15, wherein a maximum depth D of the concave part and a total thickness T of the decorative sheet have a relation of ($0.15 \times T \leq D \leq T$).

**17.** A decorative material comprising an adherend and the decorative sheet according to any one of claims 1 to 16.

**18.** The decorative material according to claim 17, wherein the adherend comprises at least one member selected from a metal member and a resin member.

## Patentansprüche

**1.** Dekorfolie, umfassend ein Basismaterial und eine Oberflächenschutzschicht, wobei mindestens eines von Basismaterial und Oberflächenschutzschicht ein weißes Pigment enthält, die Oberflächenschutzschicht ein gehärtetes Produkt einer härtbaren Harzzusammensetzung ist, und eine Martens-Härte der Dekorfolie 9 N/mm$^2$ oder mehr und 25 N/mm$^2$ oder weniger beträgt, wobei das weiße Pigment mindestens eines ist, ausgewählt aus der Gruppe, bestehend aus Titanoxid vom Rutiltyp, Bleiweiß und Antimonweiß, und wobei die Martens-Härte der Dekorfolie wie in der Beschreibung beschrieben bestimmt wird.

**2.** Dekorfolie nach Anspruch 1, umfassend eine Dekorschicht zwischen dem Basismaterial und der oberflächenschützenden Schicht, wobei mindestens eines von dem Basismaterial und der Dekorschicht ein weißes Pigment enthält.

**3.** Dekorfolie nach Anspruch 2, wobei das Basismaterial und die Dekorschicht ein weißes Pigment enthalten.

**4.** Dekorfolie nach einem der Ansprüche 1 bis 3, wobei das weiße Pigment Titanoxid vom Rutiltyp ist.

**5.** Dekorfolie nach einem der Ansprüche 1 bis 4, wobei der Gehalt des weißen Pigments im Basismaterial 1 Masseteil oder mehr und 50 Masseteile oder weniger beträgt, basierend auf 100 Masseteilen eines Harzes, welches das Basismaterial bildet.

**6.** Dekorfolie nach einem der Ansprüche 2 bis 5, wobei der Gehalt des weißen Pigments in der Dekorschicht 5 Masseteile oder mehr und 90 Masseteile oder weniger beträgt, basierend auf 100 Masseteilen eines Harzes, welches die Dekorschicht bildet.

**7.** Dekorfolie nach einem der Ansprüche 1 bis 6, umfassend mindestens eine von einer Harzschicht und einer Grundierungsschicht zwischen dem Basismaterial und der Oberflächenschutzschicht, wobei die Oberflächenschutzschicht und die mindestens eine Schicht der Harzschicht und der Grundierungsschicht einen Ultraviolettabsorber enthalten.

**8.** Dekorfolie nach Anspruch 7, wobei der Gehalt ($M_1$) des Ultraviolettabsorbers in der mindestens einen Schicht der Harzschicht und der Grundierungsschicht größer ist als der Gehalt ($M_2$) des Ultraviolettabsorbers in der Oberflächenschutzschicht.

**9.** Dekorfolie nach Anspruch 7 oder 8, wobei der Ultraviolettabsorber, der in der Oberflächenschutzschicht und in der mindestens einen Schicht der Harzschicht und der Grundierungsschicht enthalten ist, einen Absorber auf Triazinbasis umfasst.

**10.** Dekorfolie nach einem der Ansprüche 7 bis 9, wobei der Ultraviolettabsorber, der in der Oberflächenschutzschicht und der mindestens einen Schicht der Harzschicht und der Grundierungsschicht enthalten ist, eine Hydroxyphenyltriazinverbindung ist, die durch die nachstehende allgemeine Formel (1) dargestellt wird:

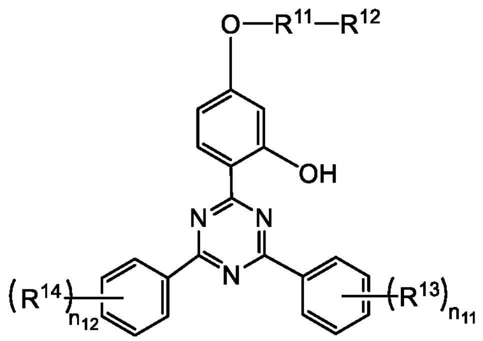

(1)

wobei $R^{11}$ eine zweiwertige organische Gruppe ist; $R^{12}$ eine Estergruppe ist, die durch -C(=O)O$R^{15}$ dargestellt wird; $R^{13}$, $R^{14}$ und $R^{15}$ jeweils unabhängig eine einwertige organische Gruppe sind; und $n_{11}$ und $n_{12}$ jeweils unabhängig eine ganze Zahl von 1 bis 5 sind.

**11.** Dekorfolie nach Anspruch 10, wobei der Ultraviolettabsorber eine Hydroxyphenyltriazinverbindung ist, die durch die allgemeine Formel (1) dargestellt wird, wobei $R^{11}$ eine Alkylengruppe mit 1 oder mehr und 20 oder weniger Kohlenstoffatomen ist; $R^{12}$ und $R^{15}$ jeweils eine Alkylestergruppe mit einer Alkylgruppe mit 1 oder mehr und 20 oder weniger Kohlenstoffatomen sind; $R^{13}$ und $R^{14}$ jeweils eine Arylgruppe mit 6 oder mehr und 20 oder weniger Kohlenstoffatomen sind; und $n_{11}$ und $n_{12}$ jeweils 1 sind.

**12.** Dekorfolie nach einem der Ansprüche 1 bis 11, wobei das härtbare Harz ein durch ionisierende Strahlung härtbares Harz ist.

**13.** Dekorfolie nach einem der Ansprüche 1 bis 12, wobei mindestens eines von dem Basismaterial und der Oberflächenschutzschicht einen Lichtstabilisator auf Basis eines gehinderten Amins enthält.

14. Dekorfolie nach einem der Ansprüche 2 bis 13, wobei die Dekoschicht einen Lichtstabilisator auf Basis eines gehinderten Amins enthält.

15. Dekorfolie nach einem der Ansprüche 1 bis 14, die einen konkaven Teil auf der Oberfläche der Oberflächenschutzschicht auf der gegenüberliegenden Seite der Oberfläche auf der Seite des Basismaterials aufweist.

16. Dekorfolie nach Anspruch 15, wobei eine maximale Tiefe D des konkaven Teils und eine Gesamtdicke T der Dekorfolie ein Verhältnis von ($0.15 \times T \leq D \leq T$) haben.

17. Dekormaterial, umfassend ein Haftmittel und die Dekorfolie nach einem der Ansprüche 1 bis 16.

18. Dekormaterial nach Anspruch 17, wobei das Haftmittel mindestens ein Mitglied, ausgewählt aus einem Metallelement und einem Harzelement, umfasst.

## Revendications

1. Feuille décorative comprenant un matériau de base et une couche protectrice de surface, dans laquelle au moins un du matériau de base et de la couche protectrice de surface contient un pigment blanc, la couche protectrice de surface est un produit durci d'une composition de résine durcissable, et une dureté Martens de la feuille décorative est de 9 $N/mm^2$ ou plus et 25 $N/mm^2$ ou moins, dans laquelle le pigment blanc est au moins un sélectionné parmi le groupe constitué de l'oxyde de titane de type rutile, du plomb blanc et du blanc d'antimoine, et dans laquelle la dureté Martens de la feuille décorative est déterminée tel que décrit dans la description.

2. Feuille décorative selon la revendication 1, comprenant une couche décorative entre le matériau de base et la couche protectrice de surface, au moins un du matériau de base et de la couche protectrice de surface contenant un pigment blanc.

3. Feuille décorative selon la revendication 2, dans laquelle le matériau de base et la couche décorative contiennent un pigment blanc.

4. Feuille décorative selon l'une quelconque des revendications 1 à 3, dans laquelle le pigment blanc est de l'oxyde de titane de type rutile.

5. Feuille décorative selon l'une quelconque des revendications 1 à 4, dans laquelle la teneur en le pigment blanc dans le matériau de base est de 1 partie en masse ou plus et 50 parties en masse ou moins basée sur 100 parties en masse d'une résine constituant le matériau de base.

6. Feuille décorative selon l'une quelconque des revendications 2 à 5, dans laquelle la teneur en le pigment blanc dans la couche décorative est de 5 parties en masse ou plus et 90 parties en masse ou moins basée sur 100 parties en masse d'une résine constituant la couche décorative.

7. Feuille décorative selon l'une quelconque des revendications 1 à 6, comprenant au moins une d'une couche de résine et d'une couche primaire entre le matériau de base et la couche protectrice de surface, dans laquelle la couche protectrice de surface et l'au moins une couche de la couche de résine et de la couche primaire contiennent un absorbeur d'ultraviolet.

8. Feuille décorative selon la revendication 7, dans laquelle la teneur ($M_1$) en l'absorbeur d'ultraviolet dans l'au moins une couche de la couche de résine et de la couche primaire est supérieure à la teneur ($M_2$) de l'absorbeur d'ultraviolet dans la couche protectrice de surface.

9. Feuille décorative selon la revendication 7 ou 8, dans laquelle l'absorbeur d'ultraviolet contenu dans la couche protectrice de surface et l'au moins une couche de la couche de résine et de la couche primaire comprend un absorbeur à base de triazine.

10. Feuille décorative selon l'une quelconque des revendications 7 à 9, dans laquelle l'absorbeur d'ultraviolet contenu dans la couche protectrice de surface et l'au moins une couche de la couche de résine et de la couche primaire est un composé d'hydroxyphényltriazine représenté par la formule générale suivante (1) :

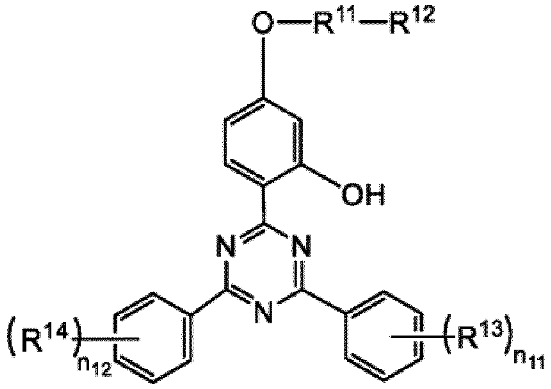

(1)

dans laquelle $R^{11}$ est un groupe organique divalent ; $R^{12}$ est un groupe ester représenté par $-C(=O)OR^{15}$ ; $R^{13}$, $R^{14}$ et $R^{15}$ sont chacun indépendamment un groupe organique monovalent ; et $n_{11}$ et $n_{12}$ sont chacun indépendamment un entier de 1 à 5.

**11.** Feuille décorative selon la revendication 10, dans laquelle l'absorbeur d'ultraviolet est un composé d'hydroxyphényltriazine représenté par la formule générale (1) où $R^{11}$ est un groupe alkylène ayant 1 ou plus et 20 ou moins atomes de carbone ; $R^{12}$ et $R^{15}$ sont chacun un groupe ester alkylique ayant un groupe alkyle ayant 1 ou plus et 20 ou moins atomes de carbone ; $R^{13}$ et $R^{14}$ sont chacun un groupe aryle ayant 6 ou plus et 20 ou moins atomes de carbone ; et $n_{11}$ et $n_{12}$ sont chacun 1.

**12.** Feuille décorative selon l'une quelconque des revendications 1 à 11, dans laquelle la résine durcissable est une résine durcissable par rayonnement ionisant.

**13.** Feuille décorative selon l'une quelconque des revendications 1 à 12, dans laquelle au moins un du matériau de base et de la couche protectrice de surface contient un photostabilisant lumineux à base d'amine encombrée.

**14.** Feuille décorative selon l'une quelconque des revendications 2 à 13, dans laquelle la couche décorative contient un photostabilisant à base d'amine encombrée.

**15.** **Feuille** décorative selon l'une quelconque des revendications 1 à 14, qui comprend une partie concave sur la surface de la couche protectrice de surface sur le côté opposé à la surface sur le côté de matériau de base de celle-ci.

**16.** Feuille décorative selon la revendication 15, dans laquelle une profondeur maximale D de la partie concave et une épaisseur totale T de la feuille décorative ont une relation de $(0,15 \times T \leq D \leq T)$.

**17.** Matériau décoratif comprenant un adhéré et la feuille décorative selon l'une quelconque des revendications 1 à 16.

**18.** Matériau décoratif selon la revendication 17, dans lequel l'adhéré comprend au moins un élément sélectionné parmi un élément métallique et un élément de résine.

[Fig. 1]

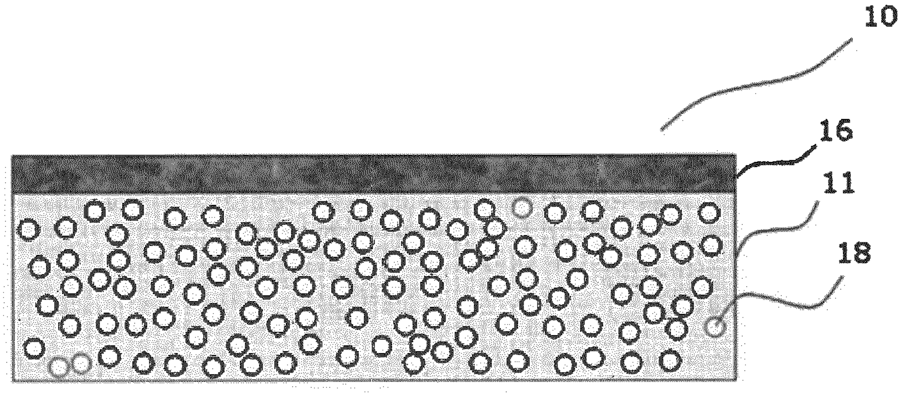


[Fig. 2]

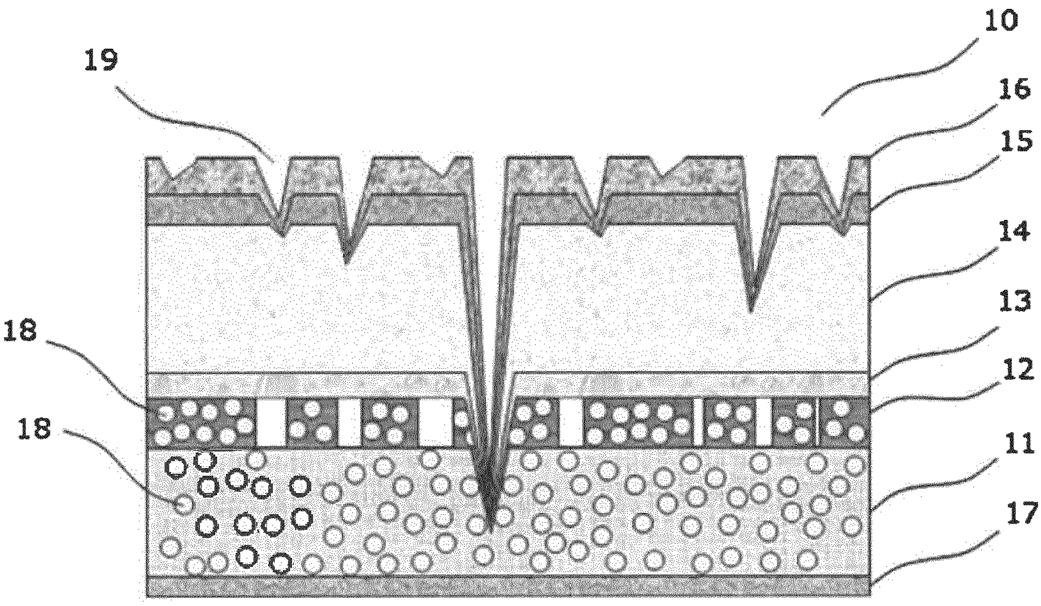


[Fig. 3]

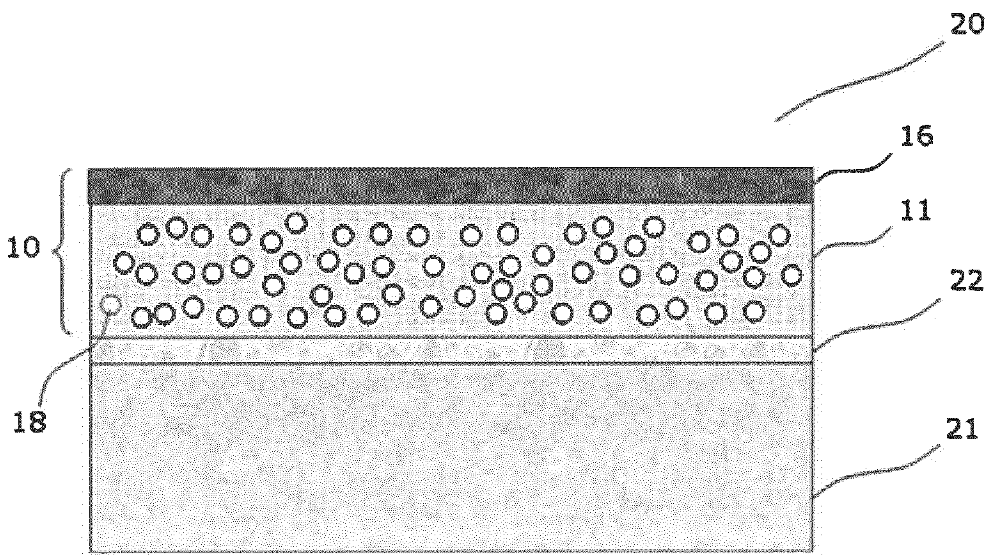

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006095992 A
- JP 2015091650 A
- JP 2001260282 A
- JP 2011207183 A
- JP 2008238444 A
- JP 2016117280 A
- JP 2016165849 A